# EUROPÄISCHE PATENTSCHRIFT

(11) **EP 3 519 686 B1**
(45) Veröffentlichungstag und Bekanntmachung des Hinweises auf die Patenterteilung: **29.07.2020**
(21) Anmeldenummer: 17777273.8
(22) Anmeldetag: 29.09.2017
(51) Int. Cl.: F02B 75/04, F02D 15/02, F16C 7/06

(54) **LÄNGENVERSTELLBARES PLEUEL MIT STEUERUNGSEINRICHTUNG**
LENGTH-ADJUSTABLE CONNECTING ROD WITH CONTROL DEVICE
BIELLE RÉGLABLE EN LONGUEUR AVEC DISPOSITIF DE COMMANDE

(30) Priorität: 30.09.2016 AT 508882016
(43) Veröffentlichungstag der Anmeldung: 07.08.2019
(73) Patentinhaber: AVL List GmbH, 8020 Graz (AT); IWIS Motorsysteme GmbH & Co. KG, 81369 München (DE)
(72) Erfinder: MELDE-TUCZAI, Helmut, 8042 Graz (AT); REDOUANE, Abdelkarim, 8047 Graz (AT); HARTWIG, Siegfried, 8052 Graz (AT)
(74) Vertreter: Breuer Friedrich Hahner Patentanwälte PartG mbB
(86) Internationale Anmeldenummer: PCT/EP2017/074836
(87) Internationale Veröffentlichungsnummer: WO 2018/060457

(56) Entgegenhaltungen:
- WO-A1-2015/108178
- WO-A1-2015/108182
- JP-A- S58 165 543

## Beschreibung

Die vorliegende Erfindung betrifft längenverstellbares Pleuel für eine Hubkolbenmaschine, insbesondere für eine Hubkolbenbrennkraftmaschine, wobei das Pleuel eine hydraulische Längenverstellvorrichtung zum Verstellen einer wirksamen Pleuellänge des Pleuels und eine wenigstens zwischen zwei Schaltzuständen umschaltbare Steuerungseinrichtung zur Steuerung der Längenverstellung des Pleuels aufweist, wobei die Längenverstellvorrichtung wenigstens einen Hydraulikzylinder mit einem Kolben und einem ersten hydraulischen Arbeitsraum und einem zweiten hydraulischen Arbeitsraum aufweist, wobei die Steuerungseinrichtung wenigstens ein erstes Ventil und ein zweites Ventil aufweist, wobei das erste Ventil der Steuerungseinrichtung fluidkommunizierend mit dem ersten hydraulischen Arbeitsraum der Längenverstellvorrichtung verbunden oder verbindbar ist und das zweite Ventil mit dem zweiten hydraulischen Arbeitsraum und wobei das erste Ventil mithilfe eines ersten, entlang einer ersten Stellachse axial verschiebbaren und hydraulisch betätigbaren Stellkolbens betätigbar ist und das zweite Ventil mithilfe eines zweiten, entlang einer zweiten Stellachse axial verschiebbaren und hydraulisch betätigbaren Stellkolbens.

Des Weiteren betrifft die vorliegende Erfindung eine Hubkolbenmaschine, insbesondere eine Hubkolbenbrennkraftmaschine mit wenigstens einem längenverstellbaren Pleuel sowie ein Fahrzeug mit einer Hubkolbenmaschine, insbesondere mit einer Hubkolbenbrennkraftmaschine.

Als Pleuel wird im Sinne der Erfindung das stangenartige Verbindungselement bezeichnet, welches bei einer Hubkolbenmaschine die Kurbelwelle der Hubkolbenmaschine mit einem Hubkolben verbindet. Das Pleuel dient dabei dazu, eine lineare Bewegung des Hubkolbens, insbesondere eine linear-oszillierende Axialbewegung des Hubkolbens, bei dem es sich in der Regel um einen Kraft- oder Arbeitskolben handelt, in eine kreisförmige Bewegung der Kurbelwelle umzuwandeln, oder umgekehrt eine kreisförmige Bewegung der Kurbelwelle in eine lineare Bewegung des Hubkolbens umzusetzen.

Als Kurbelwelle im Sinne der Erfindung wird eine Welle verstanden, welche dazu ausgebildet ist, in einer Hubkolbenmaschine die linear-oszillierende Bewegung, insbesondere die translatorische Bewegung, eines oder mehrerer Hubkolben mithilfe von Pleueln in eine Drehbewegung umzusetzen oder umgekehrt, die Drehbewegung der Kurbelwelle in eine translatorische Bewegung umzuwandeln.

Zur Verbindung mit dem Hubkolben und der Kurbelwelle weist das Pleuel in der Regel an seinen beiden Enden jeweils ein Pleuellager auf, üblicherweise in Form eines Pleuelauges, wobei das Pleuel in der Regel ein kleineres Pleuelauge am kolbenseitigen Ende und ein größeres Pleuelauge am kurbelwellenseitigen Ende aufweist, bezogen auf einen funktionsgemäßen Einbauzustand eines Pleuels in einer Hubkolbenmaschine. Mithilfe eines Kolbenbolzens, der im kleinen Pleuelauge gelagert ist, kann dann am kolbenseitigen Ende des Pleuels ein Hubkolben angebunden werden. Über das größere Pleuelauge kann das Pleuel an der Kurbelwelle angebunden werden, wobei im größeren Pleuelauge üblicherweise ein als Gleitlager ausgebildetes Pleuellager angeordnet ist, welches mit Hydraulikmedium geschmiert wird, insbesondere mit dem Motoröl einer Hubkolbenmaschine.

Das Pleuel ist dabei in der Regel jeweils um eine Drehachse drehbar um die Kurbelwelle und den Kolbenbolzen gelagert, wobei der Abstand zwischen den beiden Drehachsen eine wirksame bzw. effektive Pleuellänge definiert. Durch eine Änderung der wirksamen Pleuellänge, insbesondere durch ein Verstellen der wirksamen Pleuellänge, kann in einer Hubkolbenmaschine das Verdichtungsverhältnis verändert werden, da die Änderung der wirksamen Pleuellänge eine Verschiebung des oberen Totpunkts der Kolbenbewegung bewirkt. Längenverstellbare Pleuel werden insbesondere bei Hubkolbenmaschinen mit variablem Verdichtungsverhältnis zum Einstellen des Verdichtungsverhältnisses eingesetzt. Das Ändern des Verdichtungsverhältnisses durch Verändern der wirksamen Pleuellänge ist aus dem Stand der Technik grundsätzlich bekannt, beispielsweise aus der WO 2015/108178 A1, der DE 10 2012 020 999 A1 oder der WO 2015/055582 A2.

Das in der DE 10 2012 020 999 A1 beschriebene längenverstellbare Pleuel weist einen im kleineren Pleuelauge angeordneten Exzenter auf, wobei zum Verstellen des Exzenters zumindest teilweise außerhalb des Pleuelschaftes zwei Hydraulikzylinder vorgesehen sind, die mit Motoröl aus der Hubkolbenmaschine mit Hydraulikmedium versorgt werden. Zur Steuerung der beiden Hydraulikzylinder und damit zur Längenverstellung des Pleuels ist eine Steuerungseinrichtung mit zwei Ventilen vorgesehen, mittels welcher die beiden Hydraulikzylinder jeweils derart mit Hydraulikmedium beaufschlagt werden können, dass sich die gewünschte Änderung der Pleuellänge einstellt.

Aus der WO 2015/055582 A2 ist ein längenverstellbares Pleuel mit einer hydraulischen Längenverstellvorrichtung bekannt, wobei das Pleuel in einen ersten Pleuelschaftabschnitt und in einen zweiten Pleuelschaftabschnitt geteilt ist, wobei die beiden Pleuelschaftabschnitte entlang einer Längsachse des Pleuels relativ zueinander, insbesondere teleskopartig ineinander oder auseinander, verschiebbar sind, und wobei einer der beiden Pleuelschaftabschnitte einen Hydraulikzylinder bildet und der andere Pleuelschaftabschnitt einen zugehörigen Hydraulikkolben. Zur Steuerung der Längenverstellvorrichtung ist eine hydraulisch betätigbare Steuerungseinrichtung mit einem senkrecht zur Kurbelwellenachse in einer Längsmittelebene des Pleuels axial verschiebbaren einfachwirkenden Stellkolben als Stellelement vorgesehen. Der Stellkolben kann in einem funktionsgemäßen Verwendungszustand des Pleuels in einer Hubkolbenmaschine mithilfe des in einer zugehörigen Hubkolbenmaschine anliegenden Motoröldrucks entgegen einer mittels einer Feder erzeugten Rückstellkraft von einer ersten Stellposition in eine zweiten Stellposition axial verschoben werden, wobei je nach Stellposition des Stellkolbens ein oder mehrere Hydraulikzuflüsse bzw. -abflüsse der hydraulischen Längenverstellvorrichtung freigegeben oder gesperrt sind. Über die Federsteifigkeit der Rückstellfeder kann eingestellt werden, ab welchem Motoröldruck eine Verschiebung des Stellkolbens von der ersten Stellposition in die zweiten Stellposition bewirkt werden soll.

Vor diesem Hintergrund ist es eine Aufgabe der Erfindung, ein alternatives, längenverstellbares Pleuel für eine Hubkolbenmaschine bereitzustellen, insbesondere ein verbessertes längenverstellbares Pleuel. Vorzugsweise soll eine flexiblere Anordnung der Steuerungseinrichtung im Pleuel ermöglicht werdem. Darüber hinaus ist es eine Aufgabe der Erfindung, eine alternative Hubkolbenmaschine bereitzustellen, insbesondere eine verbesserte Hubkolbenmaschine, sowie ein alternatives Fahrzeug, insbesondere ein verbessertes Fahrzeug, mit einer Hubkolbenmaschine.

Diese Aufgaben werden erfindungsgemäß durch die Lehren der unabhängigen Patentansprüche gelöst. Bevorzugte Weiterbildungen der Erfindung sind Gegenstand der Unteransprüche und werden im Folgenden näher erläutert. Der Wortlaut der Ansprüche wird zum Inhalt der Beschreibung gemacht.

Ein erfindungsgemäßes Pleuel ist dadurch gekennzeichnet, dass die erste Stellachse des ersten Ventils der Steuerungseinrichtung von der zweiten Stellachse des zweiten Ventils der Steuerungseinrichtung verschieden ist.

Durch die erfindungsgemäße Anordnung des ersten Ventils und des zweiten Ventils der Steuerungseinrichtung im Pleuel, insbesondere dadurch, dass die erste Stellachse des ersten Ventils und die zweite Stellachse des zweiten Ventils voneinander verschieden sind bzw. nicht zusammenfallen, kann eine besonders kurze Baulänge der Steuerungseinrichtung erreicht werden. Infolgedessen ist eine größere Flexibilität in der Anordnung der Steuerungseinrichtung gegeben und die Steuerungseinrichtung kann entsprechend den jeweiligen Anforderungen mit einer Vielzahl an Möglichkeiten im Pleuel angeordnet werden. Die Anordnungsmöglichkeiten der erfindungsgemäßen Steuerungseinrichtung im Pleuel unterliegen dabei daher nur geringen Einschränkungen.

Insbesondere ermöglicht ein erfindungsgemäßes Pleuel mit einer Steuerungseinrichtung, bei welcher die erste Stellachse des ersten Ventils und die zweite Stellachse des zweiten Ventils erfindungsgemäß voneinander verschieden sind, eine nahezu beliebige Anordnung des ersten Ventils und des zweiten Ventils im Pleuel. Dabei können das erste Ventil und das zweite Ventil jeweils orthogonal, parallel oder geneigt zu einer Längsachse des Pleuels angeordnet sein und/oder orthogonal, parallel oder geneigt zu einer Kurbelwellenachse, bezogen auf einen funktionsgemäßen Einbauzustand des Pleuels in einer Hubkolbenmaschine, insbesondere in einer Hubkolbenbrennkraftmaschine.

Zur Verbindung mit einem Hubkolben einer Hubkolbenmaschine, insbesondere einer Hubkolbenbrennkraftmaschine weist ein erfindungsgemäßes Pleuel an seinem kolbenseitigem Pleuelende vorzugsweise ein kleineres Pleuelauge auf oder alternativ einen fest mit dem Pleuel verbundenen Kolbenbolzen, wobei im ersteren Fall, d.h. wenn das Pleuel ein kleineres Pleuelauge aufweist, das Pleuel auf aus dem Stand der Technik hinreichend bekannte Art und Weise mithilfe eines Kolbenbolzen mit einem Hubkolben einer Hubkolbenmaschine verbunden werden kann. Im zweiten Fall weist vorzugsweise der mit dem Pleuel zu verbindende Hubkolben ein entsprechendes Auge auf, in welchem der mit dem Pleuel fest verbundene Kolbenbolzen aufgenommen werden kann, insbesondere gelagert werden kann, und der Hubkolben über den Kolbenbolzen entsprechend mit dem Pleuel verbunden werden kann. Am kurbelwellenseitigen Ende ist zur Anbindung des Pleuels an einer Kurbelwelle, wie im Stand der Technik üblich, vorzugsweise ein größeres Pleuelauge vorgesehen.

In einer vorteilhaften Ausgestaltung einer Erfindung eines erfindungsgemäßen Pleuels verläuft die erste Stellachse des ersten Ventils der Steuerungseinrichtung und/oder die zweite Stellachse des zweiten Ventils der Steuerungseinrichtung parallel zur Kurbelwellenachse, wobei vorzugsweise sowohl die erste Stellachse als auch die zweite Stellachse jeweils parallel zur Kurbelwelle verlaufen, jeweils bezogen auf einen funktionsgemäßen Einbauzustand des Pleuels in einer Hubkolbenmaschine, insbesondere in einer Hubkolbenbrennkraftmaschine.

Durch die Anordnung des ersten Ventils der Steuerungseinrichtung und/oder des zweiten Ventils der Steuerungseinrichtung mit der zugehörigen Stellachse jeweils parallel zur Kurbelwellenachse können das erste Ventil und/oder das zweite Ventil der Steuerungseinrichtung von einem großen Teil der während eines Arbeitshubs auf die Steuerungseinrichtung wirkenden Fliehkräfte auf einfache Art und Weise wirkungsvoll entkoppelt werden. Insbesondere kann mittels einer derartigen Anordnung verhindert werden, dass der erste Stellkolben und/oder der zweite Stellkolben durch die auftretenden Fliehkräfte entlang der jeweilige Stellachse axial verschoben wird und unbeabsichtigt bzw. zu einem unerwünschten Zeitpunkt das erste Ventil und/oder das zweite Ventil geöffnet bzw. geschlossen wird.

Bei einem erfindungsgemäßen Pleuel können die parallel zueinander angeordneten Stellachsen der beiden Ventile in verschiedenen, gemeinsamen Ebenen liegen, insbesondere in einer horizontalen Ebene, in einer vertikalen Ebene oder in einer geneigten Ebene, wobei die erste Stellachse und die zweite Stellachse in einer horizontalen Ebene vorzugweise nebeneinander und in einer vertikalen Ebene vorzugsweise übereinander angeordnet ist. Liegen die beiden Stellachsen in einer geneigten Ebene, sind sie vorzugsweise horizontal und/oder vertikal versetzt zueinander angeordnet. In einigen Fällen kann es vorteilhaft sein, wenn die erste Stellachse und/oder die zweite Stellachse mit der Kurbelwellenachse in einer gemeinsamen Ebene liegt.

Die Längenverstellvorrichtung eines erfindungsgemäßen Pleuels kann grundsätzlich auf verschiedenste Arten und Weisen ausgebildet sein, beispielsweise wie die in der WO 2015/055582 A2, in der WO 2016/203047 A1, in der WO 2017/102108 A1 oder der österreichischen Patentanmeldung A50757/2016 beschriebenen Längenverstellvorrichtungen, wobei für nähere Details bezüglich der Ausgestaltungsmöglichkeiten sowie der Funktionsweisen von für ein erfindungsgemäßes Pleuel geeigneten Längenverstellvorrichtungen auf die vorgenannten Dokumente verwiesen wird.

In einer weiteren vorteilhaften Ausgestaltung eines erfindungsgemäßen Pleuels weist ein erfindungsgemäßes Pleuel einen ersten Pleuelschaftabschnitt und einen zweiten Pleuelschaftabschnitt auf, wobei vorzugsweise die beiden Pleuelschaftabschnitte zum Verstellen einer wirksamen Pleuellänge relativ zueinander verschiebbar sind, insbesondere entlang der Längsachse des Pleuels.

Als Pleuelschaft wird im Sinne der Erfindung dabei der stangenartige Abschnitt zwischen dem kolbenseitigen Pleuelende und dem kurbelwellenseitigen Pleuelende verstanden.

In einer weiteren vorteilhaften Ausgestaltung eines erfindungsgemäßen Pleuels sind die beiden Pleuelschaftabschnitte zum Verstellen der wirksamen Pleuellänge teleskopartig ineinander schiebbar, vorzugsweise entlang der Längsachse des Pleuels, wobei insbesondere einer der beiden Pleuelschaftabschnitte den Hydraulikzylinder der Längenverstellvorrichtung bildet und an dem anderen Pleuelschaftabschnitt der Kolben der Längenverstellvorrichtung befestigt ist.

Der Kolben der Längenverstellvorrichtung ist vorzugsweise als doppeltwirkender Kolben ausgebildet und teilt insbesondere den Hydraulikzylinder der Längenverstellvorrichtung in den ersten hydraulischen Arbeitsraum und den zweiten hydraulischen Arbeitsraum.

Der Hydraulikzylinder der Längenverstellvorrichtung muss dabei kein Zylinder im mathematischen Sinne sein. Ein Hydraulikzylinder im Sinne der Erfindung kann auch einen, von einer kreisrunden Form abweichenden Querschnitt über seine axiale Länge aufweisen. Wichtig ist lediglich, dass der Hydraulikzylinder und der Kolben der Längenverstellvorrichtung derart ausgebildet sind, insbesondere derart korrespondierend zueinander, dass die für die Längenverstellung erforderliche Funktionalität erreicht werden kann, insbesondere eine für einen ausreichenden Druckaufbau erforderliche Dichtigkeit, ggf. unter Zuhilfenahme von Dichtungsmitteln, sowie eine ausreichende Führung des Kolbens im Hydraulikzylinder der Längenverstellung.

Vorzugsweise befindet sich der Hydraulikzylinder der Längenverstellvorrichtung dabei vollständig innerhalb des Pleuels, insbesondere innerhalb des Pleuelschaftes.

Die für die Längenverstellvorrichtung erforderliche Hydraulikversorgung erfolgt vorzugsweise über eine Hydraulikmediumzuleitung, wobei die Hydraulikmediumzuleitung insbesondere über das kurbelwellenseitige Pleuellager mit Hydraulikmedium versorgt werden kann.

In einer weiteren vorteilhaften Ausgestaltung eines erfindungsgemäßen Pleuels ist in einem ersten Schaltzustand der Steuerungseinrichtung ein Hydraulikmediumrücklauf aus dem ersten hydraulischen Arbeitsraum der Längenverstellvorrichtung gesperrt und der zweiten Arbeitsraum ist drainiert und in einem zweiten Schaltzustand der Steuerungseinrichtung ist vorzugsweise der erste hydraulische Arbeitsraum der Längenverstellvorrichtung drainiert und der Hydraulikmediumrücklauf aus dem zweiten hydraulischen Arbeitsraum der Längenverstellvorrichtung ist gesperrt.

Dazu sind das erste Ventil und das zweite Ventil der Steuerungseinrichtung vorzugsweise gegensinnig ausgebildet, insbesondere gegensinnig wirkend ausgebildet, insbesondere derart dass im ersten Schaltzustand sowie im zweiten Schaltzustand der Steuerungseinrichtung jeweils eines der beiden Ventile der Steuerungseinrichtung öffnet bzw. offen bleibt und das andere Ventil schließt bzw. geschlossen bleibt.

In einer weiteren vorteilhaften Ausgestaltung eines erfindungsgemäßen Pleuels ist der erste Stellkolben des ersten Ventils und/oder der zweite Stellkolben des zweiten Ventils als einfachwirkender Stellkolben ausgebildet, wobei der Stellkolben vorzugsweise in wenigstens eine Richtung entgegen einer Stellkolben-Rückstellkraft axial verschiebbar ist, und wobei das zugehörige Ventil zur Erzeugung der Stellkolben-Rückstellkraft vorzugsweise eine Stellkolben-Rückstellkrafteinrichtung aufweist, insbesondere eine Stellkolben-Rückstellfeder. D.h., in einer vorteilhaften Ausgestaltung eines erfindungsgemäßen Pleuels ist der Stellkolben wenigstens eines Ventils als einfachwirkender Stellkolben ausgebildet.

Vorzugsweise sind sowohl der erste Stellkolben des ersten Ventils als auch der zweite Stellkolben des zweiten Ventils jeweils als einfachwirkende Stellkolben ausgebildet. Ist eine Stellkolben-Rückstelleinrichtung vorgesehen, insbesondere eine Rückstellfeder, ist diese vorzugsweise derart ausgebildet, insbesondere deren Federsteifigkeit derart gewählt, dass bei einem definierten ersten Hydraulikdruckniveau am Stellkolben das das zugehörige Ventil schließt bzw. geschlossen bleibt und bei einem zweiten, definierten Hydraulikdruckniveau öffnet bzw. geöffnet bleibt.

Das erste, definierte Hydraulikdruckniveau entspricht dabei vorzugsweise einem ersten Hydraulikmediumdruck in einer Hubkolbenmaschine, insbesondere einem ersten Motoröldruck in einer Hubkolbenbrennkraftmaschine. Das zweite, definierte Hydraulikdruckniveau entspricht vorzugsweise einem zweiten, definierten Motoröldruck der Hubkolbenmaschine. Mittels einer derartigen Ausgestaltung der Steuerungseinrichtung kann der in der Hubkolbenmaschine anliegende Hydraulikmediumdruck, insbesondere der anliegende Motoröldruck, zur Betätigung der Steuerungseinrichtung genutzt werden.

In einer weiteren, insbesondere alternativen Ausgestaltung eines erfindungsgemäßen Pleuels ist der erste Stellkolben des ersten Ventils und/oder der zweite Stellkolben des zweiten Ventils als doppeltwirkender Stellkolben ausgebildet, wobei das Pleuel, insbesondere die Steuerungseinrichtung, zur Betätigung der Steuerungseinrichtung vorzugsweise zusätzlich ein Schaltventil aufweist, mittels dem eine Hydraulikmediumdruckdifferenz, insbesondere eine Steuermedium-Druckdifferenz, am Stellkolben aufbringbar ist. Dabei ist das Schaltventil insbesondere derart ausgebildet, dass in einem ersten Schaltzustand des Schaltventil eine erste Hydraulikmediumdruckdifferenz am Stellkolben anliegt, welche ein axiales Verschieben des Stellkolbens in eine erste Stellposition bewirkt und in einem zweiten Schaltzustand des Schaltventil eine zweite Hydraulikmediumdruckdifferenz, welche ein axiales Verschieben des Stellkolbens in eine zweite Stellposition bewirkt. D.h., in einer vorteilhaften Ausgestaltung eines erfindungsgemäßen Pleuels ist der Stellkolben wenigstens eines Ventils als doppeltwirkender Stellkolben ausgebildet. Vorzugsweise sind (in einer alternativen Ausgestaltung zu der zuvor beschriebenen Ausgestaltung mit zwei einfachwirkenden Stellkolben) jeweils der erste Stellkolben des ersten Ventils und der zweite Stellkolben des zweiten Ventils als doppeltwirkende Stellkolben ausgebildet.

Denkbar ist theoretisch aber auch, dass ein Stellkolben eines Ventils als einfacher Stellkolben ausgebildet ist und der Stellkolben des anderen Ventils als doppeltwirkender Stellkolben.

Eine derartig ausgebildete Steuerungseinrichtung mit doppelwirkenden Stellkolben hat den Vorteil, dass eine Entkopplung der Steuerung der Längenverstellvorrichtung vom anliegenden Hydraulikdruckniveau möglich wird, insbesondere eine Entkopplung von einem in der Hubkolbenbrennkraftmaschine anliegenden Motoröldruck, denn das zusätzliche Schaltventil benötigt zur Verstellung der Pleuellänge nur noch ein Hydraulikmedium-Druckniveau und damit insbesondere nur noch ein Motoröldruck-Niveau. Ferner ermöglicht das Schaltventil eine Betätigung der Steuerungseinrichtung unabhängig vom Hydraulikmedium-Druckniveau der Hubkolbenmaschine, insbesondere unabhängig von einem in einer Hubkolbenmaschine anliegenden Motoröldruck-Niveau und damit nahezu unabhängig von einem Betriebszustand der Hubkolbenmaschine.

Dabei ist das Schaltventil vorzugsweise jeweils derart mit dem ersten Stellkolben des ersten Ventils und/oder dem zweiten Stellkolben des zweiten Ventils gekoppelt, dass jeweils mittels des Schaltventils in einem ersten Schaltzustand des Schaltventils eine erste Hydraulikmediumdruckdifferenz bzw. Steuermedium-Druckdifferenz am jeweiligen Stellkolben anliegt und in einem zweiten Schaltzustand des Schaltventils eine zweite Hydraulikmediumdruckdifferenz bzw. Steuermedium-Druckdifferenz.

Vorzugsweise ist das zusätzliche Schaltventil dabei als elektromagnetisch betätigbares, hydraulisches Schaltventil ausgebildet, welches insbesondere hydraulisch mit der Steuerungseinrichtung wirkverbunden ist und elektromagnetisch betätigbar bzw. elektromagnetisch schaltbar ist. Für weitere Details, wie ein solches Schaltventil und ein das Schaltventil aufnehmendes Pleuel ausgestaltet werden können, wird in diesem Zusammenhang auf die WO 2017/102108 A1 verwiesen, in welcher ein derartiges Schaltventil sowie ein Pleuel mit einem solchen Schaltventil beschrieben ist.

Alternativ kann das zusätzliche Schaltventil auch als mechanisch betätigbares, hydraulisches Schaltventil ausgebildet sein, welches insbesondere hydraulisch mit der Steuerungseinrichtung wirkverbunden ist und mechanisch betätigbar ist, beispielsweise mit einer Kulissenführung oder dergleichen. Für weitere Details, wie ein solches Schaltventil und ein das Schaltventil aufnehmendes Pleuel ausgestaltet werden können, wird in diesem Zusammenhang auf die österreichische Patentanmeldung A50757/2016 verwiesen, in welcher ein derartiges Schaltventil sowie ein Pleuel mit einem solchen Schaltventil beschrieben ist.

Bei einem erfindungsgemäßen Pleuel kann auch für jedes Ventil der Steuerungseinrichtung, d.h., sowohl für das erste Ventil der Steuerungseinrichtung als auch für das zweite Ventil der Steuerungseinrichtung, jeweils ein separates, zusätzliches Schaltventil vorgesehen sein zur Betätigung der Steuerungseinrichtung bzw. zur separaten Betätigung des ersten Ventils der Steuerungseinrichtung und des zweiten Ventils der Steuerungseinrichtung.

Das/die zusätzliche(n) Schaltventil/e und die Steuerungseinrichtung sind dabei vorzugsweise derart miteinander wirkverbunden und das erste Ventil und das zweite Ventil sowie das/die zusätzliche(n) Schaltventil/e sind insbesondere jeweils derart ausgebildet, dass in einem ersten Schaltzustand der Steuerungseinrichtung ein Hydraulikmediumrücklauf aus dem ersten hydraulischen Arbeitsraum der Längenverstellvorrichtung gesperrt ist und der zweite hydraulische Arbeitsraum der Längenverstellvorrichtung drainiert ist und dass in einem zweiten Schaltzustand der Steuerungseinrichtung der erste hydraulische Arbeitsraum der Längenverstellvorrichtung drainiert ist und ein Hydraulikmediumrücklauf aus dem zweiten hydraulischen Arbeitsraum der Längenverstellvorrichtung gesperrt ist.

In einer weiteren vorteilhaften Ausgestaltung eines erfindungsgemäßen Pleuels ist das erste Ventil der Steuerungseinrichtung und/oder das zweite Ventil der Steuerungseinrichtung ein Hubventil und weist einen entlang einer Hubachse axial verschiebbaren Ventilkörper auf, wobei der Ventilkörper zum Sperren des Hydraulikmediumrücklaufs aus dem zugehörigen, mit dem Ventil fluidkommunizierend verbundenen oder verbindbaren hydraulischen Arbeitsraum gegen einen Ventilsitz pressbar ist und zum Drainieren des zugehörigen Arbeitsraumes vom Ventilsitz abhebbar ist, wobei das Abheben des Ventilkörpers vom Ventilsitz vorzugsweise mithilfe des jeweiligen Stellkolbens des Ventils bewirkbar ist.

Die Ausgestaltung des ersten Ventils und des zweiten Ventils der Steuerungseinrichtung jeweils als Hubventil ermöglicht auf besonders einfache Art und Weise das gegensinnige Sperren des Hydraulikmediumrücklaufs und das Drainieren der hydraulischen Arbeitsräume der Längenverstellvorrichtung und damit auf besonderes einfache Art und Weise die Steuerung der Längenverstellvorrichtung.

Die Hubachse des ersten Ventils der Steuerungseinrichtung und/oder des zweiten Ventils der Steuerungseinrichtung kann bei einem erfindungsgemäßen Pleuel dabei grundsätzlich beliebig innerhalb des Pleuels verlaufen, sie muss insbesondere nicht mit der Stellachse des jeweiligen Ventils zusammenfallen und kann auch abweichend von dieser verlaufen.

Eine besonders vorteilhafte Ausgestaltung eines erfindungsgemäßen Pleuels ergibt sich, wenn das erste Ventil der Steuerungseinrichtung und das zweite Ventil der Steuerungseinrichtung jeweils Hubventile sind und jeweils einen entlang einer Hubachse axial verschiebbaren Ventilkörper aufweisen, wobei die Ventilkörper jeweils zum Sperren des Hydraulikmediumrücklaufs aus dem zugehörigen, mit dem Ventil fluidkommunizierend verbundenen oder verbindbaren hydraulischen Arbeitsraum gegen einen Ventilsitz pressbar sind und zum Drainieren des zugehörigen Arbeitsraumes vom Ventilsitz abhebbar sind, wobei das Abheben des jeweiligen Ventilkörpers vom Ventilsitz jeweils mithilfe des jeweiligen Stellkolbens des Ventils bewirkbar ist, insbesondere wenn das Pleuel derart ausgebildet ist, dass in einem ersten Schaltzustand der Steuerungseinrichtung ein Hydraulikmediumrücklauf aus dem ersten hydraulischen Arbeitsraum der Längenverstellvorrichtung gesperrt ist und der zweiten Arbeitsraum drainiert ist und in einem zweiten Schaltzustand der Steuerungseinrichtung der erste hydraulische Arbeitsraum der Längenverstellvorrichtung drainiert ist und der Hydraulikmediumrücklauf aus dem zweiten hydraulischen Arbeitsraum der Längenverstellvorrichtung gesperrt ist, und d

In einer weiteren vorteilhaften Ausgestaltung eines erfindungsgemäßen Pleuels verläuft die Hubachse wenigstens eines Hubventils parallel zur Kurbelwellenachse, vorzugsweise verlaufen die Hubachsen sämtlicher Hubventile der Steuerungseinrichtung parallel zur Kurbelwellenachse. Dadurch kann das jeweilige Ventil, insbesondere der Ventilkörper, von den während eines Arbeitshubs auftretende Fliehkräften in vielen Fällen insoweit entkoppelt werden, dass es durch die auftretenden Fliehkräfte nicht mehr zu einem unerwünschten Abheben des Ventilkörpers vom Ventilsitz oder zu einem unerwünschten Anpressen des Ventilkörpers an den Ventilsitz und damit zu einem unbeabsichtigten Öffnen und/oder Schließen des Hubventils kommen kann.

Insbesondere verlaufen sowohl die erste Stellachse des ersten Ventils und die Hubachse des ersten Ventils und/oder die zweite Stellachse des zweiten Ventils und die Hubachse des zweiten Ventils jedoch jeweils parallel zur Kurbelwellenachse.

In einer weiteren vorteilhaften Ausgestaltung eines erfindungsgemäßen Pleuels sind jeweils das erste Ventil der Steuerungseinrichtung und das zweite Ventil der Steuerungseinrichtung ein Hubventil, wobei im ersten Schaltzustand der Steuerungseinrichtung der Ventilkörper des ersten Ventils am Ventilsitz anliegt und einen Hydraulikmediumrücklauf aus dem ersten hydraulischen Arbeitsraum der Längenverstellvorrichtung sperrt und der Ventilkörper des zweiten Ventils vom Ventilsitz abgehoben ist und der zweite hydraulische Arbeitsraum der Längenverstellvorrichtung drainiert ist, und wobei im zweiten Schaltzustand der Steuerungseinrichtung der Ventilkörper des ersten Ventils vom Ventilsitz abgehoben ist und der erste hydraulische Arbeitsraum drainiert ist und der Ventilkörper des zweiten Ventils am Ventilsitz anliegt und ein Hydraulikmediumrücklauf aus dem zweiten hydraulischen Arbeitsraum der Längenverstellvorrichtung sperrt.

In einer weiteren vorteilhaften Ausgestaltung eines erfindungsgemäßen Pleuels ist der Ventilkörper wenigstens eines Hubventils wenigstens in einem Kontaktbereich, mit welchem der Ventilkörper an den Ventilsitz pressbar ist, zumindest teilweise kugelförmig, kegelförmig oder kegelstumpfförmig ausgebildet, wobei der Ventilkörper insbesondere eine Kugel ein Kegelkörper oder ein Kegelstumpf ist. Der zugehörige Ventilsitz ist vorzugsweise entsprechend korrespondierend zum Ventilkörper ausgebildet ist, insbesondere derart, dass eine ordnungsgemäße Funktion des jeweiligen Ventils sichergestellt werden kann. Ein kegelförmiger oder kegelstumpfförmiger Ventilkörper ermöglicht eine verbesserte, insbesondere eine vereinfachte Führung des Ventilkörpers innerhalb des Ventils. Insbesondere kann mit einem kegelförmigen oder kegelstumpfförmigen Ventilkörper das Ventil auf einfache Art und Weise derart ausgestaltet werden, dass ohne eine zusätzliche Taumelführung ein Taumeln des Ventilkörpers verhindert werden kann.

In einer weiteren vorteilhaften Ausgestaltung eines erfindungsgemäßen Pleuels ist der Ventilkörper wenigstens eines Hubventils ein vom Stellkolben des zugehörigen Ventils getrenntes Bauteil, wobei das Abheben des Ventilkörpers vom Ventilsitz vorzugsweise durch ein Wegdrücken des Ventilkörpers vom Ventilsitz mithilfe des Stellkolbens des Ventils bewirkbar ist.

Vorzugsweise kann der Stellkolben den Ventilkörper dabei direkt vom Ventilsitz wegdrücken, d.h. unmittelbar oder indirekt, ohne ein zwischen Ventilkörper und Stellkolben vorgesehenes Verbindungselement. In einigen Fällen, insbesondere um einen Abstand vom Stellkolben zum Ventilkörper zu überbrücken, kann es jedoch erforderlich sein, zwischen Stellkolben und Ventilkörper wenigstens ein Verbindungselement, insbesondere eine Verbindungsstange oder dergleichen vorzusehen, über welches der Ventilkörper indirekt bzw. mittelbar vom Ventilsitz weggedrückt werden kann. Das Verbindungselement ist dabei vorzugsweise fest mit dem Stellkolben verbunden, wobei das Verbindungselement auch einstückig mit dem Stellkolben ausgebildet sein kann.

Das Ventil ist dabei vorzugsweise derart ausgebildet, insbesondere ist die Länge des Verbindungselementes derart bemessen, dass in einer ersten Position des Stellkolbens der Ventilkörper vom Ventilsitz abgehoben ist und das Ventil geöffnet ist und in einer zweiten Position des Stellkolben der Ventilkörper am Ventilsitz anliegt und insbesondere beanstandet vom Verbindungselement und/oder vom Stellkolben ist, so dass das Ventil zumindest in einer Hydraulikmediumflussrichtung vom Ventilkörper in Richtung des Ventilsitzes geschlossen ist, wodurch ein Hydraulikmediumrücklauf in diese Richtung gesperrt werden kann.

In einer weiteren vorteilhaften Ausgestaltung eines erfindungsgemäßen Pleuels ist der Ventilkörper wenigstens eines Hubventils entgegen einer Ventilkörper-Rückstellkraft vom Ventilsitz abhebbar, wobei das Ventil zum Erzeugen der Ventilkörper-Rückstellkraft vorzugsweise eine Ventilkörper-Rückstelleinrichtung aufweist, mittels derer insbesondere auch das Anpressen des Ventilkörpers an den Ventilsitz bewirkt werden kann. Vorzugsweise ist die Ventilkörper-Rückstelleinrichtung eine Rückstellfeder, insbesondere eine als Schraubenfeder ausgebildete Rückstellfeder.

In einer weiteren vorteilhaften Ausgestaltung eines erfindungsgemäßen Pleuels weist das Pleuel eine Hydraulikmediumzuleitung auf, wobei der erste hydraulische Arbeitsraum der Längenverstellvorrichtung vorzugsweise wenigstens über das als Hubventil ausgebildete, erste Ventil der Steuerungseinrichtung fluidkommunizierend mit der Hydraulikmediumzuleitung verbunden oder verbindbar ist und/oder der zweite hydraulische Arbeitsraum der Längenverstellvorrichtung wenigstens über das als Hubventil ausgebildete zweite Ventil der Steuerungseinrichtung fluidkommunizierend mit der Hydraulikmediumzuleitung verbunden oder verbindbar ist, wobei insbesondere durch einen im zugehörigen Arbeitsraum anliegenden Unterdruck ein Abheben des Ventilkörpers des zugehörigen Hubventils vom Ventilsitz bewirkbar ist und Hydraulikmedium über die Hydraulikmediumzuleitung durch das fluidkommunizierend mit diesem Arbeitsraum verbundene oder verbindbare Hubventil der Steuerungseinrichtung ansaugbar ist.

Vorzugsweise ist die Federsteifigkeit der Ventilkörper-Rückstellfeder dabei derart gewählt, dass durch ein Unterdruck im zugehörigen hydraulischen Arbeitsraum der Längenverstellvorrichtung das Abheben des Ventilkörpers vom Ventilsitz bewirkt werden kann und Hydraulikmedium durch das Ventil in den Arbeitsraum angesaugt werden kann.

In einer alternativen, aber ebenfalls vorteilhaften Ausgestaltung eines erfindungsgemäßen Pleuels ist bei wenigstens einem Hubventil der Steuerungseinrichtung der Ventilkörper hingegen fest mit dem Stellkolben verbunden, wobei das Abheben des Ventilkörpers vom Ventilsitz in diesem Fall vorzugsweise durch ein Wegziehen des Ventilkörpers vom Ventilsitz mittels des Stellkolbens bewirkt werden kann und das Anpressen des Ventilkörpers an den Ventilsitz insbesondere ebenfalls mithilfe des Stellkolbens bewirkt werden kann, insbesondere durch ein Andrücken des Ventilkörpers an den Ventilsitz mittels des Stellkolbens.

Der Stellkolben kann dabei entweder direkt mit dem Ventilkörper verbunden sein, oder aber das Ventil weist ein dazwischen angeordnetes Verbindungselement auf, wobei in diesem Fall der Ventilkörper vorzugsweise über das Verbindungselement fest mit dem Stellkolben verbunden ist. Der Ventilkörper kann auch einstückig mit dem Verbindungselement und/oder dem Stellkolben ausgebildet sein.

Ist der Ventilkörper mit dem Stellkolben fest verbundenen, ist zum Anpressen des Ventilkörpers an den Ventilsitz keine Ventilkörper-Rückstelleinrichtung mehr erforderlich, da das Anpressen mithilfe des Stellkolben erfolgen kann. Dadurch kann die Baulänge der Steuerungseinrichtung nochmals deutlich verkürzt werden.

Bei einem derartig ausgebildet Ventil kann durch einen im zugehörigen Arbeitsraum anliegenden Unterdruck kein Abheben des Ventilkörpers vom Ventilsitz bewirkt werden. Somit kann über ein derart ausgebildetes Ventil kein Hydraulikmedium in den zugehörigen hydraulischen Arbeitsraum gesaugt werden. Folglich ist eine am Ventil vorbeigeführte Bypass-Leitung erforderlich, um das für die Längenverstellung erforderliche Hydraulikmedium über eine dem jeweiligen hydraulischen Arbeitsraum der Längenverstellvorrichtung zuführen zu können.

Daher ist, insbesondere, wenn die Steuerungseinrichtung ein Ventil aufweist, bei dem der Ventilkörper fest mit dem Stellkolben verbunden ist, in einer weiteren vorteilhaften Ausgestaltung eines erfindungsgemäßen Pleuels die Hydraulikmediumzuleitung vorzugsweise über jeweils ein Rückschlagventil mit dem ersten hydraulischen Arbeitsraum der Längenverstellvorrichtung und/oder mit dem zweiten hydraulischen Arbeitsraum der Längenverstellvorrichtung fluidkommunizierend verbunden oder verbindbar, wobei insbesondere durch einen im zugehörigen Arbeitsraum anliegenden Unterdruck Hydraulikmedium über die Hydraulikmediumzuleitung und das Rückschlagventil in den jeweiligen hydraulischen Arbeitsraum angesaugt werden kann. D.h. in einer weiteren vorteilhaften Ausgestaltung eines erfindungsgemäßen Pleuels ist die Hydraulikmediumzuleitung über jeweils ein Rückschlagventil mit dem ersten hydraulischen Arbeitsraum der Längenverstellvorrichtung und/oder mit dem zweiten hydraulischen Arbeitsraum der Längenverstellvorrichtung fluidkommunizierend verbunden oder verbindbar, wobei insbesondere durch einen im zugehörigen Arbeitsraum anliegenden Unterdruck Hydraulikmedium über die Hydraulikmediumzuleitung und das Rückschlagventil in den jeweiligen hydraulischen Arbeitsraum angesaugt werden kann, wobei diese Ausgestaltung besonders vorteilhaft ist, wenn die Steuerungseinrichtung ein Ventil aufweist, bei dem der Ventilkörper fest mit dem Stellkolben verbunden ist.

Diese Möglichkeit kann bei einem Hubventil mit einem vom Stellkolben getrennten Ventilkörper zusätzlich vorgesehen sein. D.h. bei einem Hubventil mit einem von Stellkolben getrennten Ventilkörper kann vorzugsweise Hydraulikmedium sowohl durch das Hubventil hindurch als auch über eine Bypass-Leitung und insbesondere über ein in der Bypass-Leitung angeordnetes Rückschlagventil in den zugehörigen hydraulischen Arbeitsraum angesaugt werden.

In einer weiteren vorteilhaften Ausgestaltung eines erfindungsgemäßen Pleuels ist das erste Ventil und/oder das zweite Ventil der Steuerungseinrichtung zumindest teilweise, vorzugsweise vollständig, mithilfe eines Ventilgehäuses im Pleuel aufgenommen, wobei das Ventilgehäuse insbesondere in das Pleuel eingeschraubt ist.

In einer alternativen, aber besonders vorteilhaften Ausgestaltung eines erfindungsgemäßen Pleuels ist das erste Ventil und/oder das zweite Ventil der Steuerungseinrichtung ohne ein Ventilgehäuse im Pleuel aufgenommen. Vorzugsweise sind sowohl das erste Ventil als auch das zweite Ventil der Steuerungseinrichtung jeweils ohne ein Ventilgehäuse im Pleuel aufgenommen, insbesondere direkt in das Pleuel eingesetzt. Das direkte Einsetzen des ersten Ventils und/oder des zweiten Ventils hat den Vorteil, dass keine Dichtungsmaßnahmen zwischen Ventilgehäuse und Pleuel vorgenommen werden müssen, wodurch Bauraum gewonnen werden kann, insbesondere in Ventillängsrichtung, d.h. parallel zur jeweiligen Stellachse. Dadurch kann die Baulänge der Steuerungseinrichtung nochmal nennenswert reduziert werden.

Eine erfindungsgemäße Hubkolbenmaschine ist dadurch gekennzeichnet, dass sie ein erfindungsgemäßes Pleuel aufweist.

Ein erfindungsgemäßes Fahrzeug mit einer Hubkolbenmaschine ist dadurch gekennzeichnet, dass es eine erfindungsgemäße Hubkolbenmaschine, insbesondere eine erfindungsgemäße Hubkolbenbrennkraftmaschine aufweist.

Diese und weitere Merkmale und Vorteile gehen außer aus den Ansprüchen und aus der Beschreibung auch aus den Zeichnungen hervor, wobei die einzelnen Merkmale jeweils für sich allein oder zu mehreren, in Form von Unterkombinationen bei einer Ausgestaltung der Erfindung verwirklicht sein können und eine vorteilhafte sowie für sich schutzfähige Ausführung darstellen können, für die ebenfalls Schutz beansprucht wird, sofern sie technisch sinnvoll ist.

Die Erfindung wird im Folgenden anhand von nicht einschränkenden Ausführungsbeispielen, die in den Figuren dargestellt sind, näher erläutert, wobei Bauteile mit gleicher Funktion die gleichen Bezugszeichen aufweisen. In den Figuren zeigen wenigstens teilweise schematisch:
- Fig. 1: beispielhalber ein längenverstellbares Pleuel mit einer gattungsgemäßen, hydraulischen Längenverstellvorrichtung in Schnittdarstellung aus dem Stand der Technik,
- Fig. 2: die Steuerungseinrichtung aus Fig. 1 im Schnitt in vergrößerter Darstellung,
- Fig. 3: eine Steuerungseinrichtung eines ersten Ausführungsbeispiels eines erfindungsgemäßen Pleuels im Schnitt,
- Fig. 4: ein Ausführungsbeispiel eines erfindungsgemäßen Pleuels in Prinzipdarstellung,
- Fig. 5: einen Ausschnitt des Hydrauliksystems zur Längenverstellung des erfindungsgemäßen Pleuels aus Fig. 4,
- Fig. 6: eine Steuerungseinrichtung eines weiteren Ausführungsbeispiels eines erfindungsgemäßen Pleuels im Schnitt,
- Fig. 7: eine Steuerungseinrichtung eines weiteren Ausführungsbeispiels eines erfindungsgemäßen Pleuels im Schnitt,
- Fig. 8: eine Steuerungseinrichtung eines weiteren Ausführungsbeispiels eines erfindungsgemäßen Pleuels im Schnitt in einem zweiten Schaltzustand der Steuerungseinrichtung und
- Fig. 9: die Steuerungseinrichtung aus Fig. 8 in einem ersten Schaltzustand.

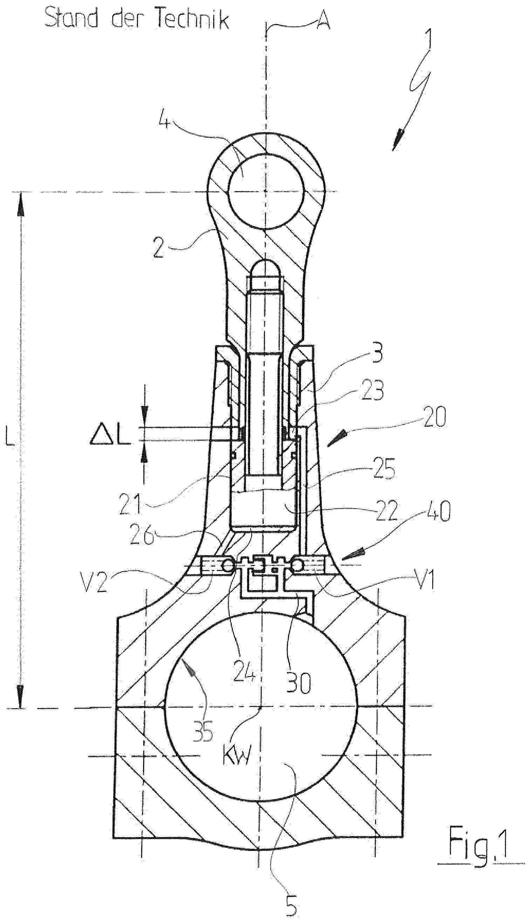

Fig. 1 zeigt zum besseren, grundsätzlichen Verständnis der Funktionsweise einer hydraulischen Längenverstellvorrichtung eines erfindungsgemäßen Pleuels eines der in der, bereits erwähnten WO 2016/203047 A1 beschriebenen Ausführungsbeispiele eines längenverstellbaren Pleuels mit einer vorteilhaften, für ein erfindungsgemäßes Pleuel geeigneten, hydraulischen Längenverstellvorrichtung 20 mit einem ersten Hydraulikzylinder 21, einem Kolben 22, einem ersten hydraulischen Arbeitsraum 23 und einem zweiten hydraulischen Arbeitsraum 24.

Das Pleuel 1 weist einen geteilten Pleuelschaft auf mit einem ersten Pleuelschaftabschnitt 2 und einem zweiten Pleuelschaftabschnitt 3, wobei an einem kolbenseitigen Ende des Pleuels 1 bzw. des ersten Pleuelschaftabschnittes 2 zur Verbindung mit einem Hubkolben einer Hubkolbenmaschine, insbesondere einer Hubkolbenbrennkraftmaschine, ein kleineres Pleuelauge 4 vorgesehen ist und an einem kurbelwellenseitigen Ende des Pleuels 1 bzw. des zweiten Pleuelschaftabschnittes 3 ein größeres Pleuelauge 5 zur Anbindung des Pleuels 1 an einer Kurbelwelle der Hubkolbenmaschine. Die Kurbelwelle ist in Fig. 1 nicht dargestellt; ihre Längsachse, die Kurbelwellenachse KW, verläuft normal zu einer Längsachse A des Pleuels sowie normal zur Zeichenebene von Fig. 1. Eine Längsmittelebene des Pleuels 1 verläuft durch die Längsachse A des Pleuels 1 und erstreckt sich normal zur Kurbelwellenachse KW, also parallel zur und/oder in der Zeichenebene von Fig. 1.

Der erste Pleuelschaftabschnitt 2 und der zweite Pleuelschaftabschnitt 3 sind dabei teleskopartig entlang einer Längsachse A des Pleuels 1 ineinander verschiebbar, wobei am oberen Pleuelschaftabschnitt 2 der Kolben 22 der Längenverstellvorrichtung 20 befestigt ist und der untere Pleuelschaftabschnitt 3 den Hydraulikzylinder 21 der Längenverstellvorrichtung 20 bildet, in welchem der Kolben 22 der Längenverstellvorrichtung 20 entlang der Längsachse A des Pleuels 1 verschiebbar gelagert ist. Je nach Position des Kolbens 22 der Längenverstellvorrichtung 20 im ersten Hydraulikzylinder 21 der Längenverstellvorrichtung 20 stellt sich eine andere wirksame bzw. effektive Pleuellänge L ein, welche definiert ist durch den Abstand der Drehachsen des Pleuels 1 um den Kolbenbolzen bzw. um die Kurbelwelle. Durch den maximal möglichen Hub des Kolbens 22 der Längenverstellvorrichtung 20 ist eine maximale Änderung ΔL der wirksamen bzw. effektiven Pleuellänge L determiniert.

Der Kolben 22 der Längenverstellvorrichtung 20 ist dabei als doppeltwirkender Kolben 22 ausgebildet, wobei der Kolben 22 der Längenverstellvorrichtung mit dem ersten Hydraulikzylinder 21 der Längenverstellvorrichtung 20 einen ersten hydraulischen Arbeitsraum 23 und einen zweiten hydraulischen Arbeitsraum 24 definiert.

Zur Steuerung der Längenverstellvorrichtung 20 weist das in Fig. 1 dargestellte Pleuel 1 eine Steuerungseinrichtung 40 auf, welche einen Hydraulikmediumzufluss von einer Hydraulikmediumzuleitung 30 über einen ersten Hydraulikkanal 25 in den ersten hydraulischen Arbeitsraum 23 sowie über einen zweiten Hydraulikkanal 26 in den zweiten hydraulischen Arbeitsraum 24 der Längenverstellvorrichtung 20 steuert, wobei die Hydraulikmediumzuleitung 30 über ein hier nur angedeutetes, kurbelwellenseitiges Pleuellager 35 mit Hydraulikmedium versorgt wird. Das erste Ventil V1 ist dazu über den ersten Hydraulikkanal 25 fluidkommunizierend mit dem ersten Arbeitsraum 23 der hydraulischen Längenverstellvorrichtung 20 verbunden und das zweite Ventil V2 über den zweiten Hydraulikkanal 26 mit dem zweiten hydraulischen Arbeitsraum 24 der Längenverstellvorrichtung 20.

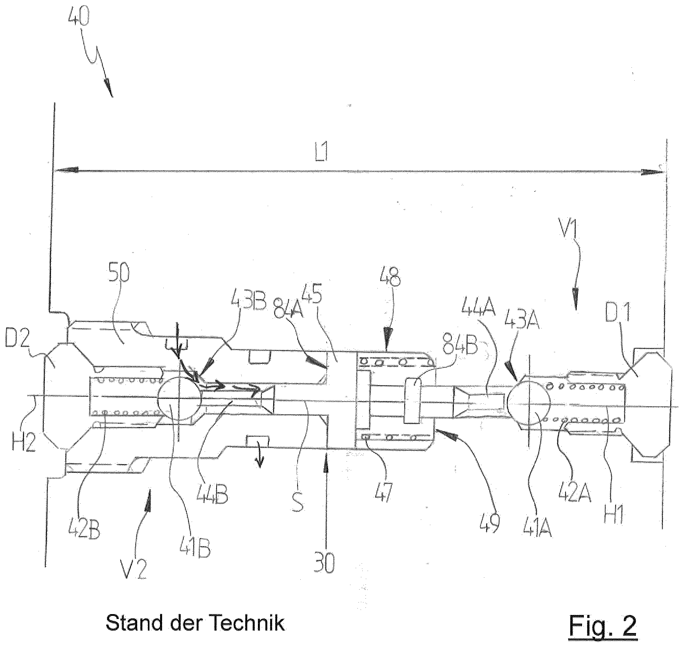

Fig. 2 zeigt zum besseren Verständnis die Steuerungseinrichtung 40 aus Fig.1 einzeln in vergrößerter und detaillierterer Darstellung. Das erste Ventil V1 und das zweite Ventil V2 sind jeweils als Hubventile ausgebildet und weisen jeweils einen nicht näher bezeichneten Ventilraum auf, in dem jeweils ein Ventilkörper 41A bzw. 41B angeordnet ist, wobei die Ventilkörper 41A, 41B zum Drainieren des zugehörigen Arbeitsraumes jeweils entlang einer zugehörigen Hubachse H1 bzw. H2 von einem zugehörigen Ventilsitz 43A bzw. 43B abgehoben werden können und zum Sperren eines Hydraulikmediumrücklaufs des zugehörigen Arbeitsraumes mittels einer Ventilkörper-Rückstellfeder 47A, 47B gegen den jeweiligen Ventilsitz 43A, bzw. 43B angepresst werden können.

In diesem Fall sind die Ventilkörper 41A und 41B als Kugeln ausgebildet und die Ventilsitze 43A und 43B derart korrespondierend zu diesen, dass insbesondere eine zum Sperren des Hydraulikmediumrücklaufs ausreichende Dichtfunktion erreicht wird.

Zum Betätigen der Steuerungseinrichtung 40 sind die Ventilkörper 41A, 41B der beiden Ventile V1 und V2 über eine gemeinsame, zumindest zwischen einer ersten Stellposition und einer zweiten Stellposition entlang einer Stellachse S axial verschiebbare Verbindungsstangen 44A und 44B, die fest mit einem, entlang der Stellachse S, in eine Richtung entgegen einer Stellkolben-Rückstellkraft axial verschiebbaren Stellkolben 45 verbunden sind, miteinander wirkverbunden. Zur Erzeugung der Stellkolben-Rückstellkraft weist die Steuerungseinrichtung eine Stellkolben-Rückstellfeder 47 auf.

In der ersten Stellposition der Verbindungsstangen 44A bzw. 44B bzw. des Stellkolbens 45 wird der Ventilkörper 41A des ersten Ventils V1 durch die Verbindungsstange 44A und in der zweiten Stellposition der Verbindungsstangen 44A bzw. 44B bzw. des Stellkolbens 45 der Ventilkörper 41B des zweiten Ventils V2 durch die Verbindungsstange 44B entgegen der Ventilkörper-Rückstellkraft vom zugeordneten Ventilsitz 43A bzw. 43B abgehoben. Dadurch wird der jeweilige, zugehörige hydraulische Arbeitsraum 23 bzw. 24 der Längenverstellvorrichtung 20 drainiert, da Hydraulikmedium durch das jeweilige Ventil V1 bzw. V2 der Steuerungseinrichtung 40 abfließen kann, wie in Fig. 2 am Beispiel des zweiten Ventils V2 mittels der kleinen Pfeile gezeigt ist.

Jeweils in der anderen Stellung der Verbindungsstangen 44A bzw. 44B bzw. des Stellkolbens 45 liegt der jeweilige Ventilkörper 41A bzw. 41B am Ventilsitz 43A an, wie in Fig. 2 beim ersten Ventil V1. Infolgedessen ist ein Hydraulikmediumrücklauf aus dem zugehörigen hydraulischen Arbeitsraum 23 bzw. 24 gesperrt. Je nachdem, ob der Hydraulikmediumrücklauf aus dem ersten hydraulischen Arbeitsraum 23 der Längenverstellvorrichtung gesperrt ist und der zweite hydraulische Arbeitsraum 24 der Längenverstellvorrichtung drainiert ist oder umgekehrt, stellt sich entweder eine kurze, wirksame Pleuellänge L ein oder eine lange Pleuellänge L.

Der Stellkolben 45 der Steuerungseinrichtung 40 nimmt dabei in Abhängigkeit von einem am Stellkolben anliegenden Hydraulikmediumdruck, welcher in der Regel einem in der Hubkolbenbrennkraftmaschine anliegenden Motoröldruck entspricht, die erste Stellposition ein oder die zweite Stellposition, wobei das Hydraulikmedium über die Hydraulikmediumzuleitung 30 (siehe auch Fig. 1) dem Stellkolben 45 zugeführt wird. Mittels vorhandener Anschlagelemente 84A und 84B kann sichergestellt werden, dass ein definierter, maximaler Verstellhub des Stellkolbens 45 nicht überschritten wird.

Bei einem geringen Druckniveau, reicht der Hydraulikdruck nicht aus, den Stellkolben 45 entgegen der Stellkolben-Rückstellkraft axial zu verschieben, so dass der Stellkolben 45 die erste Stellposition einnimmt, wodurch sich eine erste, wirksame Pleuellänge L einstellt. Bei einem ausreichend hohen Druckniveau, kann die Rückstellkraft überwunden werden, der Stellkolben nimmt die zweite Stellposition ein und eine zweite, wirksame Pleuellänge L stellt sich ein.

D.h., die wirksame Pleuellänge L und damit das zugehörige Verdichtungsverhältnis, stellt sich bei einem Pleuel mit einer vorbeschriebenen Steuerungseinrichtung 40 somit in Abhängigkeit von einem in der Hubkolbenmaschine anliegenden Hydraulikmediumdruck ein, insbesondere in Abhängigkeit von einem anliegenden Motoröldruck.

Für weitere detaillierte Ausführungen zur Funktionsweise der vorbeschriebenen Steuerungseinrichtung 40 wird insbesondere auf die vorgenannte die WO 2016/203047 A1 verwiesen.

Die einzelnen Komponenten der Steuerungseinrichtung 40, insbesondere das erste Ventil V1 und das zweite Ventil V2, sind dabei derart zueinander angeordnet, insbesondere hintereinander bzw. in einer Reihe, dass die beiden Hubachsen H1 und H2 jeweils mit der Stellachse S des gemeinsamen Stellkolbens 45 zusammenfallen. Dadurch ergibt sich in Richtung der Stellachse S eine erste Baulänge L1 der Steuerungseinrichtung 40 und infolgedessen ein entsprechender Bauraumbedarf.

Das zweite Ventil V2 der Steuerungseinrichtung 40 ist über ein in das Pleuel eingeschraubtes Ventilgehäuse 50 im Pleuel aufgenommen, wobei das Ventilgehäuse einen Steuerzylinder 48 bildet, in welchem der Stellkolben 45 entlang seiner Stellachse S axial verschoben werden kann, und an dessen Zylinderboden 49 sich die Stellkolben-Rückstellfeder 47 abstützt. Der Ventilkörper 41B sowie die Ventilkörper-Rückstellfeder 42B des zweiten Ventils V2 werden unter Vorspannung mittels eines in das Ventilgehäuse 50 eingeschraubten Verschlussdeckels D2 im Ventilgehäuse 50 gehalten. Der Ventilkörper 41A sowie die Ventilkörper-Rückstellfeder 47A werden mittels eines Verschlussdeckels D1 nach dem gleichen Prinzip unmittelbar im Pleuel gehalten.

Der Bauraumbedarf bzw. die Baulänge L1 der Steuerungseinrichtung 40 ist dabei größer als eine Pleuelbreite in einer Richtung parallel zu einer Kurbelwellenachse KW (siehe Fig. 1), bezogen auf einen funktionsgemäßen Einbauzustand des Pleuels 1 in einer Hubkolbenmaschine. Folglich kann die Steuerungseinrichtung 40 nicht mit der Stellachse S bzw. den Hubachsen H1 und H2 parallel zur Kurbelwellenachse KW angeordnet werden, sondern nur in einer sich senkrecht zur Kurbelwellenachse KW erstreckenden Ebene oder geneigt zur Kurbelwellenachse KW. Dies hat zur Folge, dass bei hohen Drehzahlen, insbesondere bei Drehzahlen über etwa 3000 U/min der Stellkolben 45 und insbesondere die Ventilkörper 41A und 41B der Steuerungseinrichtung 40 infolge der während eines Arbeitshubs wirkenden Fliehkräfte axial verschoben werden können, wodurch es zu einem unbeabsichtigten, unerwünschten Öffnen der beiden Ventile kommen kann, wenn einer der Ventilkörper 41A, 41B vom zugehörigen Ventilsitz 43A, 43B abgehoben wird. Eine Empfindlichkeit der Ventile V1, V2 in Bezug auf ein unerwünschtes Öffnen kann zwar in geringem Maße durch eine Erhöhung der Federsteifigkeit der Ventilkörper-Rückstellfeder 47A, 47B verringert werden. Dies geht jedoch nur begrenzt, da eine zu große Rückstellkraft das Öffnen erschwert bzw. bei einer zu großen Rückstellkraft ein zuverlässiges Öffnen nicht mehr möglich ist.

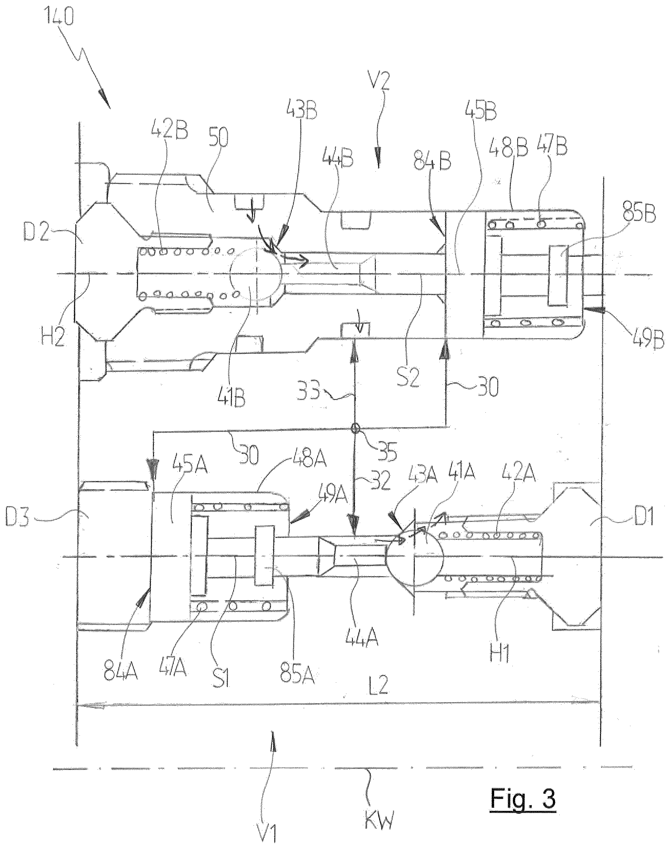

Fig. 3 zeigt im Schnitt eine Steuerungseinrichtung 140 eines ersten Ausführungsbeispiels eines erfindungsgemäßen Pleuels, bei der im Unterschied zu der zuvor beschriebenen Steuerungseinrichtung 40 das erste Ventil V1 und das zweite Ventil V2 der Steuerungseinrichtung 140 jeweils nicht hintereinander, d.h. in einer Reihe, angeordnet sind, sondern derart, dass die Stellachsen S1 und S2 der beiden Stellkolben 45A und 45B nicht zusammenfallen sondern voneinander verschieden sind, wobei jedem der beiden Ventile V1 und V2 der Steuerungseinrichtung 140 ein eigener Stellkolben 45A bzw. 45B zugeordnet ist.

Die Steuerungseinrichtung 140 funktioniert grundsätzlich nach dem gleichen Prinzip wie die zuvor beschriebene Steuerungseinrichtung 40, nur dass jedes Ventil V1, V2 wie bereits erläutert, durch einen eigenen separaten Stellkolben 45A bzw. 45B betätigt werden kann. Dabei sind sowohl der erste Stellkolben 45A des ersten Ventils V1 als auch der zweite Stellkolben 45B des zweiten Ventils V2 jeweils entlang einer zugehörigen ersten Stellachse S1 bzw. einer zweiten Stellachse S2 entgegen einer durch eine Rückstellfeder 47A bzw. 47B erzeugte Stellkolben-Rückstellkraft bei einem ausreichenden anliegenden Hydraulikmediumdruck axial verschiebbar, wobei die beiden Stellkolben 45A und 45B ebenfalls über die Hydraulikmediumzuleitung 30 jeweils mit Hydraulikmediumdruck beaufschlagt werden können, wobei die Hydraulikmediumzuleitung aus dem kurbelwellenseitigen Pleuellager, welches hier durch das Bezugszeichen 35 nur angedeutet ist, mit Hydraulikmedium versorgt werden kann.

Über die Hydraulikleitung 32 und das erste Ventil V1 kann im in Fig. 3 dargestellten ersten Schaltzustand der Steuerungseinrichtung 140 dem mit dem ersten Ventil V1 fluidkommunizierend verbundenen, ersten hydraulischen Arbeitsraum der Längenverstellvorrichtung Hydraulikmedium zugeführt werden, wie durch die kleinen Pfeile angedeutet, wenn der im zugehörigen hydraulischen Arbeitsraum anliegende Unterdruck ausreicht, ein Abheben des Ventilkörpers 41A vom Ventilsitz 43A zu bewirken, wobei das Hydraulikmedium dabei durch das erste Ventil V1 hindurch zum zugehörigen hydraulischen Arbeitsraum der Längenverstellung geführt wird. Gleichzeitig kann in diesem Schaltzustand durch das zweite Ventil V2 hindurch und über die Hydraulikleitung 33 Hydraulikmedium aus dem zweiten hydraulischen Arbeitsraum der Längenverstellvorrichtung abgeführt werden, insbesondere ins Pleuellager 35.

Entsprechend kann im zweiten Schaltzustand der Steuerungseinrichtung 140 der mit dem ersten Ventil V1 fluidkommunizierend verbundene, erste hydraulische Arbeitsraum der Längenverstellvorrichtung über die Hydraulikleitung 32 drainiert werden und der mit dem zweiten Ventil V2 fluidkommunizierend verbundene, zweite hydraulische Arbeitsraum über die Hydraulikleitung 33 mit Hydraulikmedium versorgt werden.

Wie bei der zuvor beschriebenen Steuerungseinrichtung 40 führt ein Hydraulikmedium-Druckniveau, mit welchem die Stellkolben-Rückstellkraft der Stellkolben-Rückstellfeder 47A bzw. 47B des jeweiligen Ventils V1 bzw. V2 überwunden werden kann, zu einer axialen Verschiebung des Stellkolbens 45A bzw. 45B entlang der zugehörigen ersten Stellachse S1 bzw. der zweiten Stellachse S2, wobei das erste Ventil V1 und das zweite Ventil V2 der Steuerungseinrichtung 140 dabei gegensinnig zueinander ausgebildet sind, so dass jeweils infolge der axialen Verschiebung der beiden Stellkolben 45A und 45B eines der beiden Ventile V1 und V2 durch Abheben des Ventilkörpers 41A bzw. 41B vom zugehörigen Ventilsitz 43A bzw. 43B öffnet und das andere Ventil V1 bzw. V2 durch Anpressen des jeweiligen Ventilkörpers 41A bzw. 41B an den zugehörigen Ventilsitz 43A bzw. 43B zumindest in einer Richtung sperrt.

Bei der in Fig, 3 gezeigten Steuerungseinrichtung 140 schließt bei einem Hydraulikmediumdruckniveau, mit welchem die Stellkolben-Rückstellkraft der Stellkolben-Rückstellfedern 47A und 47B jeweils überwunden werden können, das zweite Ventil V2 und das erste Ventil V1 öffnet, da eine axiale Verschiebung des zweiten Stellkolbens 45B des zweiten Ventils V2, bezogen auf die Darstellung in Fig. 3, ein Verschieben des Stellkolbens 45B nach rechts bewirkt, wodurch die Verbindungsstange 44B, welche fest mit dem Stellkolben 45B verbunden ist, ebenfalls nach rechts verschoben wird und bei Erreichen der Endposition des Stellkolbens 45B nicht mehr gegen den Ventilkörper 41B des zweiten Ventils V2 drückt und somit diesen nicht mehr vom zugehörigen Ventilsitz 43B abhebt. Durch die Ventilkörper-Rückstellfeder 42B wird der Ventilkörper 41B außerdem zurück an den Ventilsitz 43B gepresst.

Ein Hydraulikmediumdruckniveau, mit welchem die Stellkolben-Rückstellkraft der Stellkolben-Rückstellfeder 47A überwunden werden kann, bewirkt ebenfalls ein Verschieben des ersten Stellkolbens 45A des ersten Ventils V1 nach rechts, bezogen auf die Darstellung in Fig. 3, und infolgedessen auch ein Verschieben der Verbindungsstange 44A nach rechts, welche fest mit dem Stellkolben 45A verbunden ist. Dadurch wird der Ventilkörper 41A des ersten Ventils entgegen der Ventilkörper-Rückstellkraft, welche durch die Ventilkörper-Rückstellfeder 42A, erzeugt wird, entlang der Hubachse H1 vom zugehörigen Ventilsitz 43A des ersten Ventils abgehoben, so dass das erste Ventil öffnet.

Reicht der Hydraulikmediumdruck an den jeweiligen Stellkolben 45A und 45B des ersten Ventils V1 und des zweiten V2 jeweils nicht aus, um die Stellkolben-Rückstellkraft zu überwinden, wie in dem in Fig. 3 dargestellten Zustand, drücken die Stellkolben-Rückstellfedern 47A und 47B jeweils den zugehörigen Stellkolben 45A bzw. 45B, bezogen auf die Darstellung in Fig. 3 nach links, in die andere Endposition, in welcher mithilfe der Verbindungsstange 44B der Ventilkörper 41B des zweiten Ventils V2 entgegen der Ventilkörper-Rückstellkraft entlang der Hubachse H2 vom zugehörigen Ventil des 43B abgehoben wird. Dadurch wird das zweite Ventil V2 geöffnet. Der Stellkolben 45A des ersten Ventils wird ebenfalls, bezogen auf die Darstellung in Fig. 3, nach links verschoben, auch durch die Stellkolben-Rückstellfeder 47A, insbesondere entlang der ersten Stellachse S1. Dadurch wird die Verbindungsstange 44A vom Ventilkörper 41A zurückgezogen. Infolgedessen kann der Ventilkörper 41A mithilfe der Ventilkörper-Rückstellfeder 42A gegen den zugehörigen Ventilsitz 43A gepresst werden, wodurch das erste Ventil V1 zumindest in einer Richtung geschlossen wird. Um sicherzustellen, dass jeweils ein maximaler Hub der Stellkolben 45A und 45B nicht überschritten wird, weist diese Steuerungseinrichtung ebenfalls Anschlagelemente 84A, 85A, 84B und 85B auf.

Das erste Ventil V1 und das zweite Ventil V2 sind bei der in Fig. 3 gezeigten Steuerungseinrichtung 140 dabei in einer vertikalen Ebene übereinander angeordnet, insbesondere derart, dass die erste Stellachse S1 des ersten Ventils V1 parallel zur zweiten Stellachse S2 des zweiten Ventils V2 verläuft. Dadurch baut die Steuerungseinrichtung 140 kürzer als die vorbeschriebene Steuerungseinrichtung 40, wobei die in Fig. 3 gezeigte Steuerungseinrichtung 140 eine zweite Baulänge L2 aufweist.

Die kürzere Baulänge L2 der Steuerungseinrichtung 140 aus Fig. 3 hat den Vorteil, dass die Steuerungseinrichtung derart im Pleuel angeordnet werden kann, dass die erste Stellachse S1 und die zweite Stellachse S2 parallel zur Kurbelwellenachse KW des Pleuels verlaufen. Dadurch kann eine Entkopplung der Steuerungseinrichtung 140, insbesondere der Ventile V1 und V2, von den während eines Arbeitshubs auftretenden Fliehkräften bewirkt werden. Dies hat den Vorteil, dass ein unbeabsichtigtes, axiales Verschieben der Stellkolben 45A und 45B entlang der jeweiligen Stellachsen S1 und S2 sowie ein unbeabsichtigtes Abheben der Ventilkörper 41A bzw. 41B vom jeweiligen Ventilsitz 43A bzw. 43B bzw. ein unerwünschtes Anpressen an den jeweiligen Ventilsitz 43A bzw. 43B und ein infolgedessen auftretendes, unerwünschtes Öffnen oder Schließen der Ventile V1 und V2 vermieden werden kann.

Zur Anordnung der beiden Ventile V1 und V2 der Steuerungseinrichtung in einem erfindungsgemäßen Pleuel ist für das zweite Ventil V2 ein ähnlich ausgebildetes Ventilgehäuse 50 vorgesehen, wie bei der Steuerungseinrichtung 40 aus Fig. 2.

Das Ventilgehäuse 50 des zweiten Ventils V2 ist in das Pleuel eingeschraubt, während das erste Ventil V1 unmittelbar vom Pleuel selbst aufgenommen ist, d.h. ohne ein Ventilgehäuse dazwischen. Der Ventilkörper 41B sowie die Ventilkörper-Rückstellfeder 42B des zweiten Ventils V2 werden unter Vorspannung mittels eines in das Ventilgehäuse 50 eingeschraubten Verschlussdeckels D2 im Ventilgehäuse 50 gehalten. Der Ventilkörper 41A sowie die Ventilkörper-Rückstellfeder 42A werden mittels eines Verschlussdeckels D1 nach dem gleichen Prinzip unmittelbar im Pleuel gehalten.

Das Ventilgehäuse 50 bildet dabei wie bei der Steuerungseinrichtung 40 aus Fig. 2 einen Steuerzylinder 48B, in welchem der Stellkolben 45B des zweiten Ventils entlang seiner Stellachse S2 axial verschoben werden kann, und an dessen Zylinderboden 49B sich die Stellkolben-Rückstellfeder 47B abstützt. Der Stellkolben 45A ist hingegen in einem durch das Pleuel gebildeten Steuerzylinder 48A aufgenommen, wobei sich die Stellkolben-Rückstellfeder 47A ebenfalls am zugehörigen Zylinderboden 49A abstützt. Der Stellkolben 45A des ersten Ventils V2 bzw. der Steuerzylinder 48A, in welchem der Stellkolben 45A axial verschoben werden kann ist dabei mittels eines in das Pleuel eingeschraubten Verschlussdeckels D3 nach außen abgedichtet. Für eine gute Führung der Ventilkörper 41A und 41 B weisen die Ventile V1 und V2 ferner jeweils eine nicht dargestellte Taumelführung auf.

Die Stellkolben 45A und 45B des ersten Ventils V1 und des zweiten Ventils V2 sind dabei jeweils als einfachwirkende Stellkolben 45A und 45B ausgebildet und können nur auf einer von der Stellkolben-Rückstellfeder 47A bzw. 47B abgewandten Seite des Stellkolbens 45A bzw. 45B mit Hydraulikmedium beaufschlagt werden. Infolgedessen sind zur Betätigung der Steuerungseinrichtung 140, insbesondere zum Betätigen des ersten Ventils V1 und des zweiten Ventils V2, d.h. zum Öffnen und Schließen der beiden Ventile V1 und V2, zwei unterschiedliche Hydraulikmediumdruckniveaus erforderlich, insbesondere ein Druckniveau, mit welchem die jeweilige Stellkolben-Rückstellkraft nicht überwunden werden kann, und ein Druckniveau, mit welchem die durch die jeweilige Stellkolben-Rückstellfeder 47A bzw. 47B erzeugte Stellkolben-Rückstellkraft überwunden werden kann.

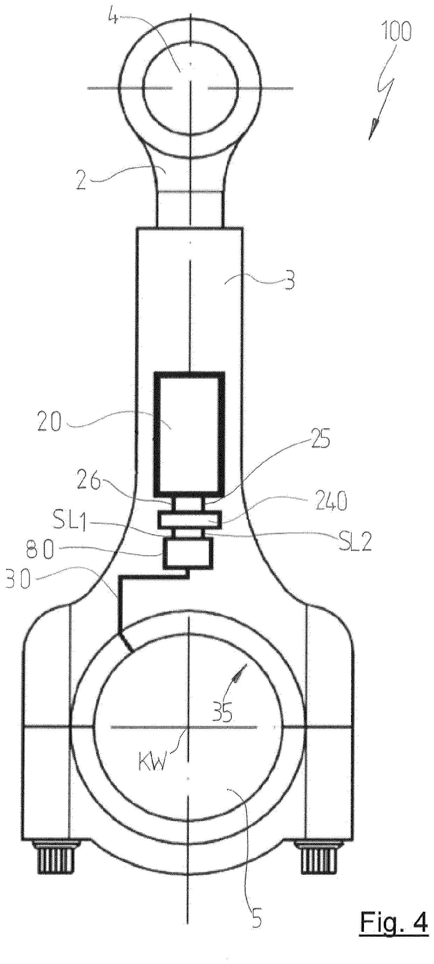

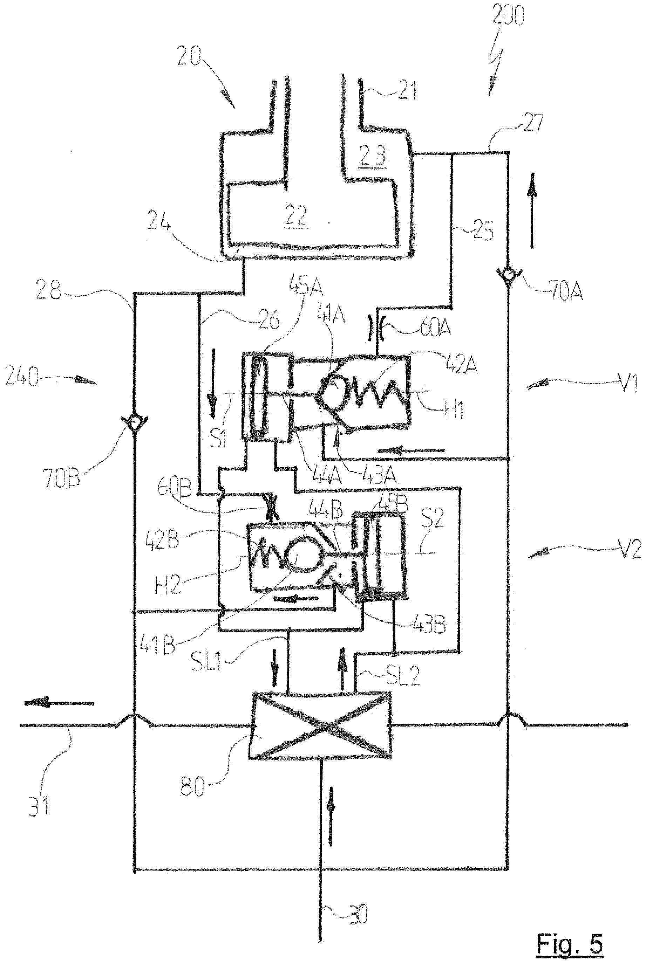

Fig. 4 zeigt in Prinzipdarstellung ein Ausführungsbeispiel eines erfindungsgemäßen Pleuels 100, das eine Steuerungseinrichtung 140 aufweist, mit welcher Steuerung der Längenverstellvorrichtung 20 unabhängig von einem anliegenden Hydraulikmedium-Druckniveau möglich ist. Dazu weist die Steuerungseinrichtung 240 ein als Hubventil ausgebildetes, erstes Ventil V1 und ein ebenfalls als Hubventil ausgebildetes, zweites Ventil V2 auf sowie zusätzlich ein Schaltventil 80 zum Betätigen der Steuerungseinrichtung 240, wobei das erste Ventil V1 und das zweite Ventil V2 jeweils einen doppeltwirkenden Stellkolben 45A bzw. 45B aufweisen (siehe Fig. 5), die jeweils in einem nicht näher bezeichneten Steuerraum entlang einer Stellachse S1 bzw. S2 axial verschiebbar angeordnet sind. Dabei ist das erste Ventil V1 fluidkommunizierend über einen ersten Hydraulikkanal 25 mit dem ersten hydraulischen Arbeitsraum der Längenverstellvorrichtung 20 verbunden oder verbindbar und das zweite Ventil V2 über einen zweiten Hydraulikkanal 26 mit dem zweiten hydraulischen Arbeitsraum der Längenverstellvorrichtung 20.

Das Schaltventil 80 ist in diesem Fall, bei dem in Fig. 4 dargestellten erfindungsgemäßen Pleuel 100 ein elektromagnetisch betätigbares, hydraulisches Schaltventil zur hydraulischen Betätigung der Steuerungseinrichtung 240, wobei das Schaltventil 80 über die Hydraulikmediumzuleitung 30 mit Hydraulikmedium aus dem kurbelwellenseitigen Pleuellager 35 versorgt werden kann und jeweils über zwei Steuerleitungen SL1 und SL2 jeweils mit dem ersten Ventil V1 und dem zweiten Ventil V2 der Steuerungseinrichtung 240 fluidkommunizierend verbunden ist.

Die beiden Steuerleitungen SL1 und SL2 sind dabei jeweils derart mit dem ersten Ventil V1 und dem zweiten Ventil V2 der Steuerungseinrichtung 240 verbunden, dass die Stellkolben 45A und 45B des ersten Ventils V1 und des zweiten Ventils V2 jeweils mit einer Steuermedium-Druckdifferenz beaufschlagt werden können.

Je nach anliegender Steuermedium-Druckdifferenz nehmen der erste Stellkolben 45A und der zweite Stellkolben 45B jeweils die erste Stellposition oder die zweite Stellposition ein, wobei auch bei der Steuerungseinrichtung 240 das erste Ventil V1 und das zweite Ventil V2 derart gegensinnig zueinander ausgebildet und hydraulisch mit dem Schaltventil 80 gekoppelt sind, dass bei einem der beiden Ventile V1 bzw. V2 der zugehörige Ventilkörper 41A bzw. 41B vom zugehörigen Ventilsitz 43A bzw. 43B abgehoben wird und der Ventilkörper 41A bzw. 41B des anderen Ventils V1 bzw. V2 an den zugehörigen Ventilsitz 43A bzw. 43B gepresst wird.

Die zur Betätigung der Steuerungseinrichtung erforderliche Steuermedium-Druckdifferenz an den beiden Stellkolben 45A und 45B wird dabei mittels des Schaltventils 80 aufgebracht, wobei das Schaltventil 80 dazu ausgebildet ist, im ersten Schaltzustand, wie in Fig. 5 dargestellt, die mit der ersten Steuerleitung SL1 fluidkommunizierend verbundenen Steuerräume des beiden Ventile V1 und V2 zu drainieren und Hydraulikmedium über eine Drainage 31 abzuführen und den jeweils mit der zweiten Steuerleitung SL2 verbundenen Steuerräumen über die Hydraulikmediumzuleitung 30 Hydraulikmedium zuzuführen. Dadurch nehmen die Stellkolben 45A und 45B jeweils die erste Stellposition ein, in welcher der Ventilkörper 41B vom zugehörigen Ventilsitz 43B abgehoben wird und der Ventilkörper 41A des ersten Ventils V1 an den zugehörigen Ventilsitz 43A gepresst wird und somit ein Hydraulikmediumrücklauf aus dem ersten Arbeitsraum 23 der Längenverstellvorrichtung 20 gesperrt wird und der zweite hydraulische Arbeitsraum der Längenverstellvorrichtung 20 drainiert ist.

Im zweiten Schaltzustand des Schaltventils 80 wird entsprechend den mit der ersten Steuerleitung SL1 fluidkommunizierend verbundenen Steuerräumen des ersten Ventils V1 und des zweiten Ventils V2 über die Hydraulikmediumzuleitung 30 Hydraulikmedium zugeführt und über das Schaltventil 80 die jeweils anderen, fluidkommunizierend mit der zweiten Steuerleitung SL2 verbundenen Steuerräume drainiert, so dass die jeweiligen Stellkolben 45A bzw. 45B die zweite Stellposition einnehmen, in welcher der Ventilkörper 41A vom zugehörigen Ventilsitz 43A abgehoben wird und der Ventilkörper 41B des zweiten Ventils V2 an den zugehörigen Ventilsitz 43B gepresst wird und somit ein Hydraulikmediumrücklauf aus dem zweiten Arbeitsraum 24 der Längenverstellvorrichtung 20 gesperrt wird und der erste hydraulische Arbeitsraum 23 der Längenverstellvorrichtung 20 drainiert wird.

Das zusätzliche Schaltventil 80 ermöglicht eine Betätigung der Steuerungseinrichtung 240 unabhängig vom jeweils anliegenden Hydraulikmedium-Druckniveau in der Hubkolbenmaschine und somit auch eine Längenverstellung unabhängig vom Betriebszustand der Hubkolbenmaschine, wobei Voraussetzung für die Verwendung eines zusätzlichen Schaltventils 80 ist, dass der erste Stellkolben 45A und der zweite Stellkolben 45B des ersten Ventils V1 und des zweiten Ventils V2 jeweils als doppeltwirkende Stellkolben 45A und 45B ausgebildet sind.

Bei der in Fig. 5 gezeigten Darstellung befindet sich die Steuerungseinrichtung 240 in einem ersten Schaltzustand, in welchem mittels des ersten Ventils V1 ein Hydraulikmediumrücklauf aus dem ersten hydraulischen Arbeitsraum 23 der Längenverstellvorrichtung 20 gesperrt ist und der zweite hydraulische Arbeitsraum 24 mithilfe des zweiten Ventils V2 drainiert ist.

In dem in Fig. 5 gezeigten, ersten Schaltzustand der Steuerungseinrichtung 250 kann mit jedem Abwärtshub des Pleuels durch den während des Abwärtshubs im ersten hydraulischen Arbeitsraum 23 der Längenverstellvorrichtung 20 erzeugten Unterdruck, so lange Hydraulikmedium aus der Hydraulikmediumzuleitung 30 in den ersten hydraulischen Arbeitsraum 23 eingesaugt werden, bis die minimale, wirksame Pleuellänge erreicht ist.

Das Hydraulikmedium kann dabei zum einen über eine Bypass-Leitung 27 und das Rückschlagventil 70A und zum anderen über das erste Ventil V1 durch die Drossel 60A und über den ersten Hydraulikkanal 25 angesaugt werden, wobei die Federsteifigkeit der Ventilkörper-Rückstellfeder 42A des ersten Ventils V1 derart dimensioniert ist, dass durch den Sog die Ventilkörper-Rückstellkraft überwunden werden kann und ein Abheben des Ventilkörpers 41A des ersten Ventils V1 vom zugehörigen Ventilsitz 43A und damit ein Öffnen des ersten Ventils V1 bewirkt werden kann.

Unter einer Drossel bzw. einem Drosselventil wird im Rahmen der vorliegenden Offenbarung entweder ein separates Bauteil oder ein drosselnd wirkender Abschnitt einer Leitung verstanden.

In zweiten Schaltzustand der Steuerungseinrichtung, in welchem mittels des zweiten Ventils V2 ein Hydraulikmediumrücklauf aus dem zweiten hydraulischen Arbeitsraum 24 der Längenverstellvorrichtung 20 gesperrt ist während der erste Arbeitsraum drainiert ist, kann entsprechend mit jedem Aufwärtshub des Pleuels durch den während des Aufwärtshubs im zweiten hydraulischen Arbeitsraum 24 der Längenverstellvorrichtung 20 erzeugten Unterdruck, so lange Hydraulikmedium aus der Hydraulikmediumzuleitung 30 in den zweiten hydraulischen Arbeitsraum 24 eingesaugt werden, bis die maximale, wirksame Pleuellänge erreicht ist.

In diesem Fall kann das Hydraulikmedium zum einen über eine Bypass-Leitung 28 und das Rückschlagventil 70B und zum anderen über das zweite Ventil V durch die Drossel 60B und über den zweiten Hydraulikkanal 26 angesaugt werden, wobei die Federsteifigkeit der Ventilkörper-Rückstellfeder 42B des zweiten Ventils V2 ebenfalls derart dimensioniert ist, dass durch den Sog die Ventilkörper-Rückstellkraft überwunden werden kann und ein Abheben des Ventilkörpers 41A B des zweiten Ventils V2 vom zugehörigen Ventilsitz 43B und damit ein Öffnen des zweiten Ventils V2 bewirkt werden kann.

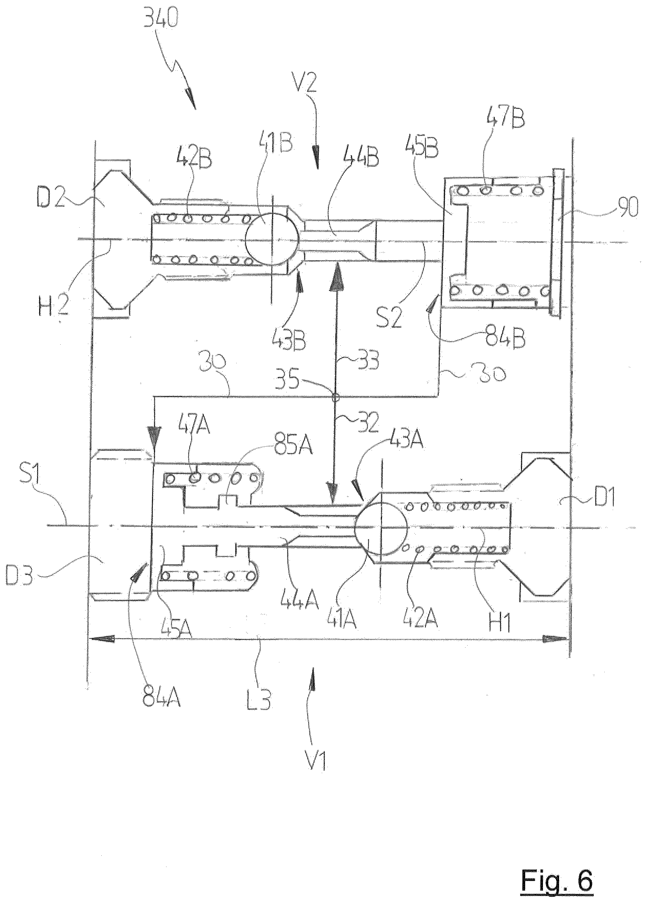

Fig. 6 zeigt eine Steuerungseinrichtung 340 eines dritten Ausführungsbeispiels eines erfindungsgemäßen Pleuels im Schnitt, wobei diese Steuerungseinrichtung vom Prinzip her genauso aufgebaut ist wie die zuvor anhand von Fig. 3 ausführlich erläuterte Steuerungseinrichtung 140. Im Unterschied zu der in Fig. 3 dargestellten Steuerungseinrichtung 140 können bei der in Fig. 6 gezeigten Steuerungseinrichtung 340 sowohl das erste Ventil V1 als auch das zweite Ventil V2 direkt, d.h. unmittelbar und ohne ein zusätzliches Ventilgehäuse, im Pleuel aufgenommen werden, wobei zur Abstützung der Stellkolben-Rückstellfeder 47B ein axial wirkendes Sicherungselement 90 vorgesehen ist. Und der Ventilkörper 41B und die Ventilkörper-Rückstellfeder 42B werden über den Verschlussdeckel D2 unter Vorspannung im Pleuel gehalten, wobei der Verschlussdeckel D2 in diesem Fall direkt in das Pleuel statt in das Ventilgehäuse eingeschraubt ist. Mit dem Entfall des Ventilgehäuses können auch einige bauraumbeanspruchende Dichtmaßnahmen entfallen, wodurch die Baulänge der Steuerungseinrichtung 340 noch weiter auf die Baulänge L3 reduziert werden kann.

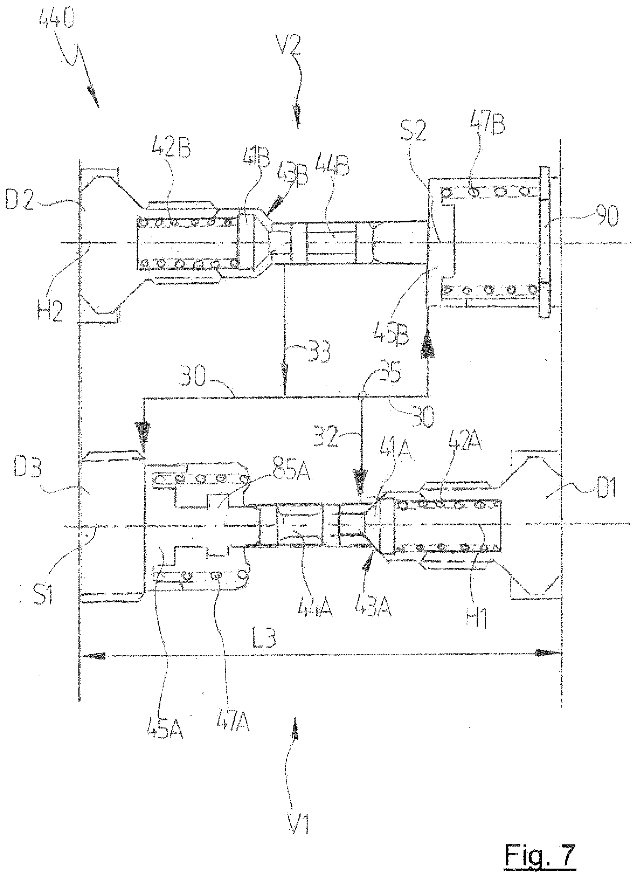

Fig. 7 zeigt eine Steuerungseinrichtung 440 eines vierten Ausführungsbeispiels eines erfindungsgemäßen Pleuels im Schnitt, wobei diese Steuerungseinrichtung 440 im Wesentlichen der Steuerungseinrichtung aus Fig. 6 entspricht und sich lediglich in der Geometrie der Ventilkörper 41A und 41B und der zugehörigen Ventilsitze 43A und 43B von dieser unterscheidet. Bei der in Fig. 7 dargestellten Steuerungseinrichtung 440 sind die Ventilkörper 41A und 41B in ihrem an den zugehörigen Ventilsitz 43A bzw. 43B pressbaren Bereich kegelstumpfförmig ausgebildet, während die Ventilkörper bei der Steuerungseinrichtung 340 aus Fig. 6 sowie bei den zuvor beschriebenen Steuerungseinrichtungen 40, 140, 240 und 340 jeweils durch Kugeln 41A, 41B gebildet sind. Die kegelstumpfförmigen Ventilkörper 41A und 41B ermöglichen eine besonders einfache Führung, so dass keine zusätzliche Taumelführung erforderlich ist, wie das bei Kugeln als Ventilkörpern der Fall ist.

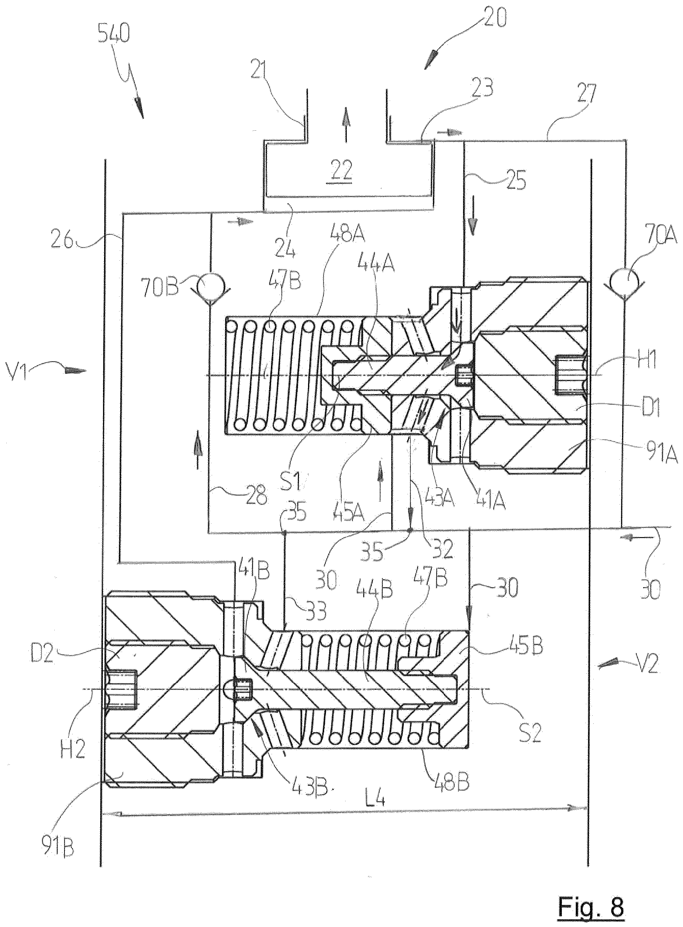

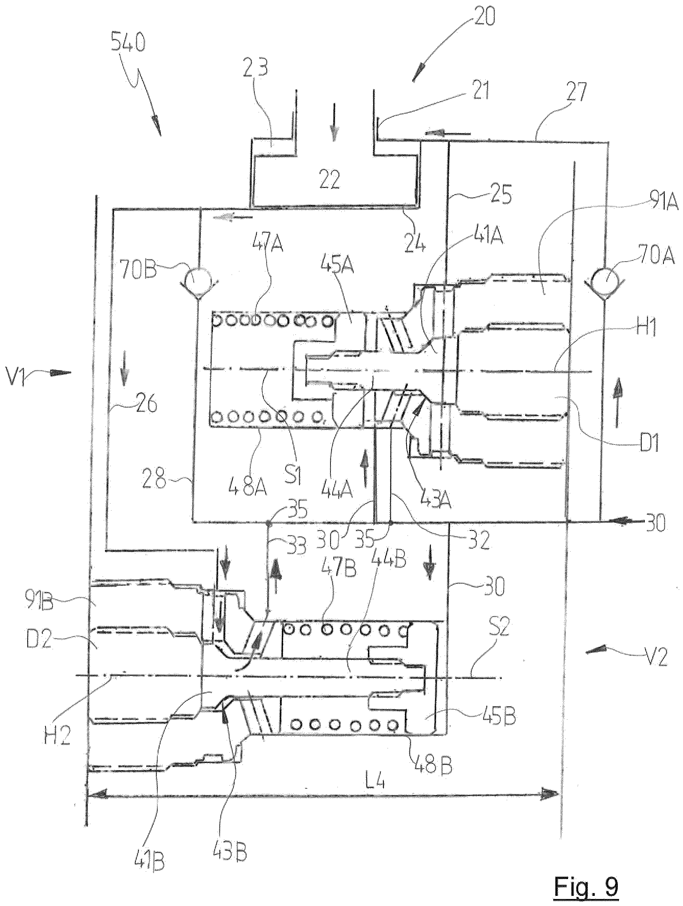

Die Fig. 8 und 9 zeigen eine Steuerungseinrichtung 540 eines fünften Ausführungsbeispiels eines erfindungsgemäßen Pleuels, wobei diese Steuerungseinrichtung 540 in Fig. 8 in einem zweiten Schaltzustand dargestellt ist und in Fig. 9 in einem ersten Schaltzustand. In diesem Fall sind die Ventilkörper 41A und 41B des ersten Ventils V1 und des zweiten Ventils V2 jeweils keine vom Stellkolben 45A bzw. 45B getrennten Bauteile, sondern fest mit den Stellkolben 45A und 45B verbunden, insbesondere durch eine Verschraubung, wobei die Ventilkörper 41A und 41B jeweils einstückig mit einer Verbindungsstange 44A bzw. 44B ausgebildet sind, wobei die Verbindungsstange 44A bzw. 44B jeweils mit dem zughörigen Stellkolben 45A, 45B verschraubt ist.

Dies hat den Vorteil, dass keine Ventilkörper-Rückstelleinrichtungen mehr erforderlich sind, da das Anpressen der Ventilkörper 41A und 41B an die zugehörigen Ventilsitze 43A und 43B bei entsprechender geometrischer Ausgestaltung, insbesondere bei einem entsprechend gewählten Abstand zwischen Ventilkörper 41A und 41B bzw. Stellkolben 45A und 45B, durch axiales Verschieben des Stellkörpers 45A und 45B automatisch erfolgt. Infolgedessen weist die Steuerungseinrichtung 540 eine noch kleinere Baulänge L4 auf, als die zuvor beschriebenen Steuerungseinrichtungen 140, 240, 340 und 440.

Wie bei den zuvor beschriebenen Ventilen V1 und V2 der zuvor beschriebenen Steuerungseinrichtungen 140, 340 und 440 sind die Stellkolben 45A und 45B des ersten Ventils V1 und des zweiten Ventils V2 auch in diesem Fall jeweils als einfachwirkende Stellkolben 45A und 45B ausgebildet, welche jeweils über die Hydraulikmediumzuleitung 30 mit Hydraulikmedium beaufschlagt werden können und jeweils entlang einer zugehörigen Stellachse S1 bzw. S2 axial verschiebbar sind, insbesondere in eine Richtung entgegen einer Stellkolben-Rückstellkraft, welche mittels einer Stellkolben-Rückstellfeder 47B bzw. 47A erzeugt wird.

Die beiden Ventile V1 und V2 sind ebenfalls direkt im Pleuel aufgenommen, insbesondere jeweils in einer Sacklochbohrung, welche jeweils den Steuerzylinder 48A bzw. 48B bildet. Die Ventilsitze 43A und 43B sind jeweils Teil einer in das Pleuel eingeschraubten Ventilhülse 91A bzw. 91 B, welche den Steuerzylinder 48A bzw. 48B jeweils nach außen zusammen mit einem in die Ventilhülse 91A, 91B eingeschraubten Verschlussdeckel D1 bzw. D2 abdichtet.

Ist, wie in Fig. 8 dargestellt, im zweiten Schaltzustand der Steuerungseinrichtung 540 der Ventilkörper 41A des ersten Ventils V1 vom zugehörigen Ventilsitz 43A abgehoben, ist der mit dem ersten Ventil V1 fluidkommunizierend verbundene, erste hydraulische Arbeitsraum 23 der Längenverstellvorrichtung 20 drainiert, wobei das Hydraulikmedium aus dem ersten hydraulischen Arbeitsraum 23 dabei über den ersten Hydraulikkanal 25, durch das erste Ventil V1 hindurch und die Hydraulikleitung 32 in das kurbelwellenseitige Pleuellager 35 abgeführt werden kann.

In diesem Schaltzustand der Steuerungseinrichtung 540 wird gleichzeitig der Ventilkörper 41B des zweiten Ventils V2 am zugehörigen Ventilsitz 43B angepresst, wodurch ein Hydraulikmediumrücklauf aus dem zweiten hydraulischen Arbeitsraum 24 der Längenverstellvorrichtung 20 gesperrt ist. Das erste Ventil V1 und das zweite Ventil V2 weisen jeweils Drainagekanäle auf, über welche zum Drainieren des jeweils zugehörigen hydraulischen Arbeitsraumes 23 bzw. 24 der Längenverstellvorrichtung 20, Hydraulikmedium abgeführt werden kann.

Da bei dieser Steuerungseinrichtung 540, insbesondere bei den auf diese Weise ausgebildeten Ventilen V1 und V2, die Ventilkörper 41A und 41B jeweils fest mit dem Stellkolben 45A bzw. 45B verbunden sind, kann jeweils keiner der Ventilkörper 41A bzw. 41B durch einen im hydraulischen Arbeitsraum erzeugten Unterdruck vom zugehörigen Ventilsitz 43A bzw. 43B abgehoben werden, so dass jeweils nicht durch das erste Ventil V1 und das zweite Ventil V2 hindurch, Hydraulikmedium in den jeweiligen hydraulischen Arbeitsraum angesaugt werden kann.

Daher ist zum Befüllen der hydraulischen Arbeitsräume 23 und 24 bei der Steuerungseinrichtung 540 jeweils eine Bypass-Leitung 27 bzw. 28 vorgesehen, über welche Hydraulikmedium am ersten Ventil V1 und am zweiten Ventil V2 vorbei in den jeweiligen hydraulischen Arbeitsraum 23 bzw. 24 der Längenverstellvorrichtung gesaugt werden kann. Um dabei einen Hydraulikmediumrücklauf aus dem jeweiligen Arbeitsraum 23 bzw. 24 der Längenerstellvorrichtung 20 zu verhindern, ist jeweils ein Rückschlagventil 70A zw. 70B in den beiden Bypass-Leitungen 27 und 28 angeordnet.

D.h., bei der in den Fig. 8 und 9 dargestellten Steuerungseinrichtung 540 erfolgt die Befüllung der hydraulischen Arbeitsräume 23 und 24 der Längenverstellvorrichtung 20 nicht sowohl über das zugehörige Ventil V1 bzw. V2 der Steuerungseinrichtung 540 und eine Bypass-Leitung 27 bzw. 28, wie bei den zuvor beschriebenen Steuerungseinrichtungen 140, 240, 340 und 440, sondern jeweils nur über die zugehörige Bypass-Leitung 27 bzw. 28 und das jeweilige Rückschlagventil 70A bzw. 70B.

Im ersten, in Fig. 9 dargestellten Schaltzustand der Steuerungseinrichtung 540 wird entsprechend der Ventilkörper 41A des ersten Ventils V1 mittels des Stellkolbens 45A an den zugehörigen Ventilsitz 43A angepresst, so dass ein Hydraulikmediumrücklauf aus dem ersten hydraulischen Arbeitsraum 23 der Längenverstellvorrichtung 20 gesperrt ist, während der Ventilkörper 41B des zweiten Ventils V2 durch ein Wegziehen vom Ventilsitz 43B abgehoben ist, wodurch das Drainieren des zweiten hydraulischen Arbeitsraumes 24 der Längenverstellvorrichtung 20 bewirkt wird. Das Hydraulikmedium wird dabei über den zweiten Hydraulikkanal 26, durch das zweite Ventil V2 hindurch über die Hydraulikleitung 33 ins kurbelwellenseitige Pleuellager 35 abgeführt wird.

Selbstverständlich ist eine Vielzahl von Abwandlungen insbesondere von konstruktiven Abwandlungen möglich ohne den Inhalt der Patentansprüche zu verlassen.

### Bezugszeichenliste

- 1: längenverstellbares Pleuel mit einer hydraulischen Längenverstellvorrichtung aus dem Stand der Technik
- 100: erfindungsgemäßes Pleuel
- 200: Ausschnitt eines Hydrauliksystems für ein erfindungsgemäßes Pleuel
- 2: erster Pleuelschaftabschnitt
- 3: zweiter Pleuelschaftabschnitt
- 4: kleines Pleuelauge
- 5: großes Pleuelauge
- 20: hydraulische Längenverstellvorrichtung
- 21: erster Hydraulikzylinder
- 22: Kolben
- 23: erster hydraulischer Arbeitsraum der Längenverstellvorrichtung
- 24: zweiter hydraulischer Arbeitsraum der Längenverstellvorrichtung
- 25: erster Hydraulikkanal
- 26: zweiter Hydraulikkanal
- 27: Bypass zum ersten hydraulischen Arbeitsraum der Längenverstellvorrichtung
- 28: Bypass zum zweiten hydraulischen Arbeitsraum der Längenverstellvorrichtung
- 30: Hydraulikmediumzuleitung
- 31: Drainage
- 32, 33: Hydraulikleitung
- 35: kurbelwellenseitiges Pleuellager
- 40: Steuerungseinrichtung aus dem Stand der Technik
- 140, 240, 340, 440 540: Steuerungseinrichtung eines erfindungsgemäßen Pleuels
- 41A, 41B: Ventilkörper
- 42A, 42B: Ventilkörper-Rückstellfeder
- 43A, 43B: Ventilsitz
- 44A, 44B: Verbindungsstange

- 45, 45A, 45B: Stellkolben
- 47, 47A, 47B: Stellkolben-Rückstellfeder
- 48, 48A, 48B: Steuerzylinder
- 49, 49A, 49B: Zylinderboden
- 50: Ventilgehäuse
- 60A, 60B: Drossel
- 70A, 70B: Rückschlagventil
- 80: Schaltventil
- 84A, 84B: Anschlag
- 85A, 85B: Anschlag
- 90: axial wirkendes Sicherungselement
- 91A, 91B: Ventilhülse

- A: Längsachse des Pleuels
- D1, D2, D3: Verschlussdeckel
- H1: Hubachse des Ventilkörpers des ersten Ventils
- H2: Hubachse des Ventilkörpers des zweiten Ventils
- L: wirksame Pleuellänge
- L1: erste Baulänge der Steuerungseinrichtung
- L2: zweite Baulänge der Steuerungseinrichtung
- L3: dritte Baulänge der Steuerungseinrichtung
- L4: vierte Baulänge der Steuerungseinrichtung
- ΔL: maximale Änderung der wirksamen Pleuellänge
- KW: Kurbelwellenachse
- S: Stellachse
- S1: erste Stellachse
- S2: zweite Stellachse
- SL1: erste Steuerleitung
- SL2: zweite Steuerleitung
- V1: erstes Ventil der Steuerungseinrichtung
- V2: zweites Ventil der Steuerungseinrichtung

## Patentansprüche

1. Längenverstellbares Pleuel (100) für eine Hubkolbenmaschine, insbesondere für eine Hubkolbenbrennkraftmaschine, aufweisend:
- eine hydraulische Längenverstellvorrichtung (20) zum Verstellen einer wirksamen Pleuellänge (L) des Pleuels (100),
- eine wenigstens zwischen zwei Schaltzuständen umschaltbare Steuerungseinrichtung (140, 240, 340, 440, 540) zur Steuerung der Längenverstellung des Pleuels (100),
- wobei die Längenverstellvorrichtung (20) wenigstens einen Hydraulikzylinder (21) mit einem Kolben (22) und einem ersten hydraulischen Arbeitsraum (23) und einem zweiten hydraulischen Arbeitsraum (24) aufweist,
- wobei die Steuerungseinrichtung (140, 240, 340, 440, 540) wenigstens ein erstes Ventil (V1) und ein zweites Ventil (V2) aufweist,
- wobei das erste Ventil (V1) der Steuerungseinrichtung (140, 240, 340, 440, 540) fluidkommunizierend mit dem ersten hydraulischen Arbeitsraum (23) der Längenverstellvorrichtung (20) verbunden ist und das zweite Ventil (V2) mit dem zweiten hydraulischen Arbeitsraum (24),
- wobei das erste Ventil (V1) mithilfe eines ersten, entlang einer ersten Stellachse (S1) axial verschiebbaren und hydraulisch betätigbaren Stellkolbens (45A) betätigbar ist und das zweite Ventil (V2) mithilfe eines zweiten, entlang einer zweiten Stellachse (S2) axial verschiebbaren und hydraulisch betätigbaren Stellkolbens (47B), und
- wobei die erste Stellachse (S1) des ersten Ventils (V1) der Steuerungseinrichtung (140, 240, 340, 440, 540) von der zweiten Stellachse (S2) des zweiten Ventils (V2) der Steuerungseinrichtung (140, 240, 340, 440, 540) verschieden ist,
**dadurch gekennzeichnet, dass** die erste Stellachse (S1) des ersten Ventils (V1) der Steuerungseinrichtung (140, 240, 340, 440, 540) und die zweite Stellachse (S2) des zweiten Ventils (V2) der Steuerungseinrichtung (140, 240, 340, 440, 540) parallel zu einer Kurbelwellenachse (KW) verläuft, jeweils bezogen auf einen funktionsgemäßen Einbauzustand des Pleuels (100) in einer Hubkolbenmaschine, insbesondere in einer Hubkolbenbrennkraftmaschine.

2. Pleuel (100) nach Anspruch 1, **dadurch gekennzeichnet, dass** das Pleuel (100) einen ersten Pleuelschaftabschnitt (2) und einen zweiten Pleuelschaftabschnitt (3) aufweist, wobei vorzugsweise die beiden Pleuelschaftabschnitte (2, 3) zum Verstellen einer wirksamen Pleuellänge (L) relativ zueinander verschiebbar sind, insbesondere entlang einer Längsachse (A) des Pleuels.

3. Pleuel (100) nach Anspruch 2, **dadurch gekennzeichnet, dass** die beiden Pleuelschaftabschnitte (2, 3) zum Verstellen der wirksamen Pleuellänge (L) teleskopartig ineinander verschiebbar sind, vorzugsweise entlang der Längsachse (A) des Pleuels, wobei insbesondere einer der beiden Pleuelschaftabschnitte (3) den Hydraulikzylinder (21) der Längenverstellvorrichtung (20) bildet und an dem anderen Pleuelschaftabschnitt (2) der Kolben (22) der Längenverstellvorrichtung (20) befestigt ist.

4. Pleuel (100) nach einem der Ansprüche 1 bis 3, **dadurch gekennzeichnet, dass** in einem ersten Schaltzustand der Steuerungseinrichtung (140, 240, 340, 440, 540) ein Hydraulikmediumrücklauf aus dem ersten hydraulischen Arbeitsraum (23) der Längenverstellvorrichtung (20) gesperrt ist und der zweite hydraulische Arbeitsraum (24) der Längenverstellvorrichtung (20) drainiert ist, wobei in einem zweiten Schaltzustand der Steuerungseinrichtung (140, 240, 340, 440, 540) vorzugsweise der erste hydraulische Arbeitsraum (23) der Längenverstellvorrichtung (20) drainiert ist und der Hydraulikmediumrücklauf aus dem zweiten hydraulischen Arbeitsraum (24) der Längenverstellvorrichtung (20) gesperrt ist.

5. Pleuel nach einem der Ansprüche 1 bis 4, **dadurch gekennzeichnet, dass** der erste Stellkolben (45A) des ersten Ventils (V1) und/oder der zweite Stellkolben (45B) des zweiten Ventils (V2) als einfachwirkender Stellkolben (45A, 45B) ausgebildet ist, wobei der Stellkolben (45A, 45B) vorzugsweise in wenigstens eine Richtung entgegen einer Stellkolben-Rückstellkraft axial verschiebbar ist, und wobei das zugehörige Ventil (V1 , V2) zur Erzeugung der Stellkolben-Rückstellkraft vorzugsweise eine Stellkolben-Rückstelleinrichtung (47A, 47B) aufweist, insbesondere eine Stellkolben- Rückstellfeder (47A, 47B).

6. Pleuel (100) nach wenigstens einem der Ansprüche 1 bis 4, **dadurch gekennzeichnet, dass** der erste Stellkolben (45A, 45B) des ersten Ventils (V1) und/oder der zweite Stellkolben (45B) des zweiten Ventils (V2) als doppeltwirkender Stellkolben (45A, 45B) ausgebildet ist, wobei das Pleuel (100) zur Betätigung der Steuerungseinrichtung (140, 240, 340, 440, 540) vorzugsweise zusätzlich ein Schaltventil (80) aufweist, mittels dessen eine Hydraulikmediumdruckdifferenz am Stellkolben (45A, 45B) aufbringbar ist, wobei das Schaltventil (80) insbesondere derart ausgebildet ist, dass in einem ersten Schaltzustand des Schaltventils (80) eine erste Hydraulikmediumdruckdifferenz am Stellkolben (45A, 45B) anliegt, welche ein axiales Verschieben des Stellkolbens (45A, 45B) in eine erste Stellposition bewirkt und in einem zweiten Schaltzustand des Schaltventils (80) eine zweite Hydraulikmediumdruckdifferenz, welche ein axiales Verschieben des Stellkolbens (45A, 45B) in eine zweite Stellposition bewirkt.

7. Pleuel (100) nach einem der Ansprüche 1 bis 6, **dadurch gekennzeichnet, dass** das erste Ventil (V1) der Steuerungseinrichtung (140, 240, 340, 440, 540) und/oder das zweite Ventil (V2) der Steuerungseinrichtung (140, 240, 340, 440, 540) ein Hubventil ist und einen entlang einer Hubachse (H1 , H2) axial verschiebbaren Ventilkörper (41 A, 41 B) aufweist, wobei der Ventilkörper (41 A, 41 B) zum Sperren des Hydraulikmediumrücklaufs aus dem zugehörigen, mit dem Ventil (V1 , V2) fluidkommunizierend verbundenen oder verbindbaren hydraulischen Arbeitsraum (23, 24) gegen einen Ventilsitz (43A, 43B) pressbar ist und zum Drainie- ren des zugehörigen Arbeitsraumes (23, 24) vom Ventilsitz (43A, 43B) abhebbar ist, wobei das Abheben des Ventilkörpers (41 A, 41 B) vom Ventilsitz (43A, 43B) vorzugsweise mithilfe des jeweiligen Stellkolbens (45A, 45B) des Ventils (V1 , V2) bewirkbar ist.

8. Pleuel (100) nach Anspruch 7, **dadurch gekennzeichnet, dass** die Hubachse (H1 , H2) wenigstens eines Hubventils (V1 , V2) parallel zur Kurbelwellenachse (KW) verläuft, wobei vorzugsweise die Hubachsen (H1 , H2) sämtlicher Hubventile (V1 , V2) der Steuerungseinrichtung (140, 240, 340, 440, 540) parallel zur Kurbelwellenachse (KW) verlaufen.

9. Pleuel (100) nach Anspruch 7 oder 8, **dadurch gekennzeichnet, dass** das erste Ventil (V1) der Steuerungseinrichtung und das zweite Ventil (V2) der Steuerungseinrichtung (140, 240, 340, 440, 540) jeweils ein Hubventil (V1 , V2) ist, wobei im ersten Schaltzustand der Steuerungseinrichtung (140, 240, 340, 440, 540) der Ventilkörper (41 A) des ersten Ventils (V1) am Ventilsitz (43A) anliegt und einen Hydraulikmediumrücklauf aus dem ersten hydraulischen Arbeitsraum (23) der Längenverstellvor- richtung (20) sperrt und der Ventilkörper (41 B) des zweiten Ventils (V2) vom Ventilsitz (43B) abgehoben ist und der zweite hydraulische Arbeitsraum (24) der Längen- verstellvorrichtung (20) drainiert ist, und wobei im zweiten Schaltzustand der Steuerungseinrichtung (140, 240, 340, 440, 540) der Ventilkörper (41A) des ersten Ventils (V1) vom Ventilsitz (43A) abgehoben ist und der erste hydraulische Arbeitsraum (23) drainiert ist und der Ventilkörper (41 B) des zweiten Ventils (V2) am Ventilsitz (43B) anliegt und einen Hydraulikmediumrücklauf aus dem zweiten hydraulischen Arbeitsraum (24) der Längenverstellvorrichtung (20) sperrt.

10. Pleuel (100) nach einem der Ansprüche 7 bis 9, **dadurch gekennzeichnet, dass** der Ventilkörper (41 A, 41 B) wenigstens eines Hubventils (V1 , V2) wenigstens in einem Kontaktbereich, mit welchem der Ventilkörper (41 A, 41 B) an den Ventilsitz (43A, 43B) pressbar ist, zumindest teilweise kugelförmig, kegelförmig oder kegelstumpfförmig ausgebildet ist, wobei der Ventilkörper (41 A, 41 B) insbesondere eine Kugel ein Kegelkörper oder ein Kegelstumpf ist.

11. Pleuel (100) nach einem der Ansprüche 7 bis 10, **dadurch gekennzeichnet, dass** der Ventilkörper (41 A, 41 B) wenigstens eines Hubventils (V1 , V2) ein vom Stellkolben (45A, 45B) des zugehörigen Ventils (V1 , V2) getrenntes Bauteil ist, wobei das Abheben des Ventilkörpers (41 A, 41 B) vom Ventilsitz (43A, 43B) vorzugsweise durch ein Wegdrücken des Ventilkörpers (41 A, 41 B) vom Ventilsitz (43A, 43B) mithilfe des Stellkolbens (45A, 45B) des Ventils bewirkbar ist.

12. Pleuel (100) nach Anspruch 11, **dadurch gekennzeichnet, dass** der Ventilkörper (41 A, 41 B) wenigstens eines Hubventils (V1 , V2) entgegen einer Ventilkörper-Rückstellkraft vom Ventilsitz (43A, 43B) abhebbar ist, wobei das Ventil (V1 , V2) zum Erzeugen der Ventilkörper-Rückstellkraft vorzugsweise eine Ventilkörper-Rücksteileinrichtung (42A, 42B) aufweist, mittels derer insbesondere auch das Anpressen des Ventilkörpers (41 A, 41 B) an den Ventilsitz (43A, 43B) bewirkbar ist.

13. Pleuel (100) nach Anspruch 11 oder 12, **dadurch gekennzeichnet, dass** das Pleuel (100) eine Hydraulikmediumzuleitung (30) aufweist, wobei der erste hydraulische Arbeitsraum (23) der Längenverstellvorrichtung (20) vorzugsweise wenigstens über das als Hubventil ausgebildete erste Ventil (V1) der Steuerungseinrichtung (140, 240, 340, 440, 540) fluidkommunizierend mit der Hydraulikmediumzuleitung (30) verbunden oder verbindbar ist und/oder der zweite hydraulische Arbeitsraum (24) der Längenverstellvorrichtung (24) wenigstens über das als Hubventil ausgebildete zweite Ventil (V2) der Steuerungseinrichtung (140, 240, 340, 440, 540) fluidkommunizierend mit der Hydraulikmediumzuleitung (30) verbunden oder verbindbar ist, wobei insbesondere durch einen im zugehörigen Arbeitsraum (23, 24) anliegenden Unterdruck ein Abheben des Ventilkörpers (41 A, 41 B) des zugehörigen Hubventils (V1 , V2) vom Ventilsitz (43A, 43B) bewirkbar ist und Hydraulikmedium über die Hydraulikmediumzuleitung (30) durch das fluidkommunizierend mit diesem Arbeitsraum (23, 24) verbundene oder verbindbare Hubventil (V1 , V2) der Steuerungseinrichtung (140, 240, 340, 440, 540) ansaugbar ist.

14. Pleuel (100) nach einem der Ansprüche 7 bis 10, **dadurch gekennzeichnet, dass** der Ventilkörper (41 A, 41 B) wenigstens eines Hubventils (V1 , V2) der Steuerungseinrichtung (540) fest mit dem Stellkolben (45A, 45B) verbunden ist, wobei das Abheben des Ventilkörpers (41 A, 41 B) vom Ventilsitz (43A, 43B) vorzugsweise durch ein Wegziehen des Ventilkörpers (41 A, 41 B) vom Ventilsitz mittels des Stellkolbens (45A, 45B) des Ventils (V1 , V2) bewirkbar ist und das Anpressen des Ventilkörpers (41 A, 41 B) an den Ventilsitz insbesondere ebenfalls mithilfe des Stellkolbens (45A, 45B) bewirkbar ist.

15. Pleuel (100) nach einem der Ansprüche 1 bis 14, wobei das Pleuel eine Hydraulikmediumzuleitung (30) aufweist, **dadurch gekennzeichnet, dass** die Hydraulikmediumzuleitung (30) vorzugsweise über jeweils ein Rückschlagventil (70A, 70B) mit dem ersten hydraulischen Arbeitsraum (23) der Längenverstellvorrichtung (20) und/oder dem zweiten hydraulischen Arbeitsraum (24) der Längenverstellvorrichtung (20) fluidkommunizierend verbunden oder verbindbar ist, wobei insbesondere durch einen im zugehörigen hydraulischen Arbeitsraum (23, 24) anliegenden Unterdruck Hydraulikmedium über die Hydraulikmediumzuleitung (30) durch das Rückschlagventil (70A, 70B) in den jeweiligen hydraulischen Arbeitsraum (23, 24) ansaugbar ist.

16. Pleuel nach einem der Ansprüche 1 bis 15, **dadurch gekennzeichnet, dass** das erste Ventil (V1) und/oder das zweite Ventil (V2) der Steuerungseinrichtung (140) zumindest teilweise, vorzugsweise vollständig, mithilfe eines Ventilgehäuses (50) im Pleuel aufgenommen ist, wobei das Ventilgehäuse (50) insbesondere in das Pleuel eingeschraubt ist.

17. Pleuel (100) nach einem der Ansprüche 1 bis 15, **dadurch gekennzeichnet, dass** das erste Ventil (V1) und/oder das zweite Ventil (V2) der Steuerungseinrichtung (240, 340, 440, 540) ohne ein Ventilgehäuse im Pleuel aufgenommen ist.

18. Hubkolbenmaschine, insbesondere Hubkolbenbrennkraftmaschine, mit wenigstens einem Pleuel (100), **dadurch gekennzeichnet, dass** das Pleuel (100) nach wenigstens einem der Ansprüche 1 bis 17 ausgebildet ist.

19. Fahrzeug mit einer Hubkolbenmaschine, insbesondere mit einer Hubkolbenbrennkraftmaschine, **dadurch gekennzeichnet, dass** die Hubkolbenbrennkraftmaschine nach Anspruch 18 ausgebildet ist.

## Claims

1. A length-adjustable connecting rod (100) for a reciprocating piston engine, in particular for a reciprocating piston internal combustion engine, comprising:
- a hydraulic length-adjusting apparatus (20) for adjusting an effective connecting rod length (L) of the connecting rod (100),
- a control device (140, 240, 340, 440, 540) switchable between at least two switching states for controlling the lengthwise adjustment of the connecting rod (100),
- wherein the length-adjusting apparatus (20) comprises at least one hydraulic cylinder (21) with a piston (22) and a first hydraulic working chamber (23) and second hydraulic working chamber (24),
- wherein the control device (140, 240, 340, 440, 540) comprises at least one first valve (V1) and one second valve (V2),
- wherein the first valve (V1) of the control device (140, 240, 340, 440, 540) is connected or connectable to the first hydraulic working chamber (23) of the length-adjusting apparatus (20) in a fluid-communicating manner and the second valve (V2) to the second hydraulic working chamber (24),
- wherein the first valve (V1) can be actuated by means of a first hydraulically actuatable adjusting piston (45A) able to move axially along a first adjusting axis (S1) and the second valve (V2) is actuatable by means of a second hydraulically actuatable adjusting piston (47B) able to move axially along a second adjusting axis (S2), and
- wherein the first adjusting axis (S1) of the first valve (V1) of the control device (140, 240, 340, 440, 540) differs from the second adjusting axis (S2) of the second valve (V2) of the control device (140, 240, 340, 440, 540),
**characterized in that** the first adjusting axis (S1) of the first valve (V1) of the control device (140, 240, 340, 440, 540) and the second adjusting axis (S2) of the second valve (V2) of the control device (140, 240, 340, 440, 540) run parallel to a crankshaft axis (KW), wherein preferably both respectively run parallel to the crankshaft axis (KW) with respect to a functional installed state of the connecting rod (100) in a reciprocating piston engine, in particular a reciprocating piston internal combustion engine.

2. The connecting rod (100) according to claim 1, **characterized in that** the connecting rod (100) comprises a first connecting rod shaft section (2) and a second connecting rod shaft section (3), wherein preferably the two connecting rod shaft sections (2, 3) are displaceable relative to one another, in particular along a longitudinal axis (A) of the connecting rod, for adjusting an effective connecting rod length (L).

3. The connecting rod (100) according to claim 2, **characterized in that** the two connecting rod shaft sections (2, 3) are telescopically displaceable into one another, in particular along a longitudinal axis (A) of the connecting rod, for adjusting the effective connecting rod length (L), wherein in particular one of the two connecting rod shaft sections (3) forms the hydraulic cylinder (21) of the length-adjusting apparatus (20) and the piston (22) of the length-adjusting apparatus (20) is fixed to the other connecting rod shaft section (2).

4. The connecting rod (100) according to one of claims 1 to 3, **characterized in that** in a first switching state of the control device (140, 240, 340, 440, 540), a hydraulic medium return flow from the first hydraulic working chamber (23) of the length-adjusting apparatus (20) is blocked and the second working chamber (24) of the length-adjusting apparatus (20) is drained, wherein in a second switching state of the control device (140, 240, 340, 440, 540), preferably the first hydraulic working chamber (23) of the length-adjusting apparatus (20) is drained and the hydraulic medium return flow from the second hydraulic working chamber (24) of the length-adjusting apparatus (20) is blocked.

5. The connecting rod (100) according to one of claims 1 to 4, **characterized in that** the first adjusting piston (45A) of the first valve (V1) and/or the second adjusting piston (45B) of the second valve (V2) is/are designed as a single-acting adjusting piston (45A, 45B), wherein the adjusting piston (45A, 45B) is preferably axially displaceable in at least one direction against an adjusting piston restoring force, and wherein the associated valve (V1, V2) preferably comprises an adjusting piston resetting device (47A, 47B), in particular an adjusting piston return spring (47A, 47B), for producing the adjusting piston restoring force.

6. The connecting rod (100) according to at least one of claims 1 to 4, **characterized in that** the first adjusting piston (45A, 45B) of the first valve (V1) and/or the second adjusting piston (45B) of the second valve (V2) is/are designed as a double-acting adjusting piston (45A, 45B), wherein the connecting rod (100) preferably additionally comprises a switching valve (80) for the actuating of the control device (140, 240, 340, 440, 540), via which the adjusting piston (45A, 45B) can be subjected to a hydraulic medium pressure differential, wherein the switching valve (80) is thereby in particular designed such that in a first switching state of the switching valve (80), a first hydraulic medium pressure differential is applied on the adjusting piston (45A, 45B), which effects an axial displacement of the adjusting piston (45A, 45B) into a first set position, and in a second switching state of the switching valve (80), a second hydraulic medium pressure differential is applied which effects an axial displacement of the adjusting piston (45A, 45B) into a second set position.

7. The connecting rod (100) according to one of claims 1 to 6, **characterized in that** the first valve (V1) of the control device (140, 240, 340, 440, 540) and/or the second valve (V2) of the control device (140, 240, 340, 440, 540) is a globe valve and comprises a valve body (41A, 41B) axially displaceable along a lifting axis (H1, H2), wherein the valve body (41A, 41B) can be pressed against a valve seat (43A, 43B) to block the hydraulic medium return flow from the associated hydraulic working chamber (23, 24) fluidly connected or connectable to the valve (V1, V2) and can be lifted from the valve seat (43A, 43B) to drain the associated working chamber (23, 24), wherein the lifting of the valve body (41A, 41B) off the valve seat (43A, 43B) can preferably be effected by way of the respective adjusting piston (45A, 45B) of the valve (V1, V2).

8. The connecting rod (100) according to claim 7, **characterized in that** the lifting axis (H1, H2) of at least one globe valve (V1, V2) runs parallel to the crankshaft axis (KW), wherein preferably the lifting axes (H1, H2) of all the globe valves (V1, V2) of the control device (140, 240, 340, 440, 540) run parallel to the crankshaft axis (KW).

9. The connecting rod (100) according to claim 7 or 8, **characterized in that** the first valve (V1) of the control device and the second valve (V2) of the control device (140, 240, 340, 440, 540) are in each case a globe valve (V1, V2), whereby in the first switching state of the control device (140, 240, 340, 440, 540), the valve body (41A) of the first valve (V1) bears on the valve seat (43A) and blocks a hydraulic medium return flow from the first hydraulic working chamber (23) of the length-adjusting apparatus (20) and the valve body (41B) of the second valve (V2) is lifted from the valve seat (43B) and the second hydraulic working chamber (24) of the length-adjusting apparatus (20) is drained, and wherein in the second switching state of the control device (140, 240, 340, 440, 540), the valve body (41A) of the first valve (V1) is lifted from the valve seat (43A) and the first hydraulic working chamber (23) is drained and the valve body (41B) of the second valve (V2) bears on the valve seat (43B) and blocks a hydraulic medium return flow from the second hydraulic working chamber (24) of the length-adjusting apparatus (20).

10. The connecting rod (100) according to one of claims 7 to 9, **characterized in that** the valve body (41A, 41B) of at least one globe valve (V1, V2) is of at least partly spherical, conical or truncated conical form at least in one contact area where the valve body (41A, 41B) can be pressed against the valve seat (43A, 43B), wherein the valve body (41A, 41B) is in particular a ball, a conical body or a truncated cone.

11. The connecting rod (100) according to one of claims 7 to 10, **characterized in that** the valve body (41A, 41B) of at least one globe valve (V1, V2) is a separate component from the adjusting piston (45A, 45B) of the associated valve (V1, V2), wherein the lifting of the valve body (41A, 41B) off the valve seat (43A, 43B) can preferably be effected by the adjusting piston (45A, 45B) of the valve pushing the valve body (41A, 41B) away from the valve seat (43A, 43B).

12. The connecting rod (100) according to claim 11, **characterized in that** the valve body (41A, 41B) of at least one globe valve (V1, V2) can lift off the valve seat (43A, 43B) against a valve body restoring force, wherein the valve (V1, V2) preferably comprises a valve body resetting device (42A, 42B) for producing the valve body restoring force by means of which the pressing of the valve body (41A, 41B) on the valve seat (43A, 43B) can in particular also be effected.

13. The connecting rod (100) according to claim 11 or 12, **characterized in that** the connecting rod (100) comprises a hydraulic medium feed line (30), wherein the first hydraulic working chamber (23) of the length-adjusting apparatus (20) is preferably connected or connectable to the hydraulic medium feed line (30) in fluid-communicating manner by at least the first valve (V1) of the control device (140, 240, 340, 440, 540) designed as a globe valve and/or the second hydraulic working chamber (24) of the length-adjusting apparatus (20) is connected or connectable to the hydraulic medium feed line (30) in fluid-communicating manner by at least the second valve (V2) of the control device (140, 240, 340, 440, 540) designed as a globe valve, wherein a lifting of the valve body (41A, 41B) of the associated globe valve (V1, V2) from the valve seat can (43A, 43B) can in particular be effected by a negative acting pressure in the associated working chamber (23, 24) and hydraulic medium can be drawn in through the globe valve (V1, V2) of the control device (140, 240, 340, 440, 540) fluidly connected or connectable to said working chamber (23, 24) via the hydraulic medium feed line (30).

14. The connecting rod (100) according to one of claims 7 to 10, **characterized in that** the valve body (41A, 41B) of at least one globe valve (V1, V2) of the control device (540) is fixedly connected to the adjusting piston (45A, 45B), wherein the lifting of the valve body (41A, 41B) from the valve seat (43A, 43B) can preferably be effected by the adjusting piston (45A. 45B) of the valve (V1, V2) pulling the valve body (41A, 41B) away from the valve seat and the pressing of the valve body (41A, 41B) onto the valve seat in particular likewise effected by means of the adjusting piston (45A. 45B).

15. The connecting rod (100) according to one of claims 1 to 14, wherein the connecting rod comprises a hydraulic medium feed line (30), **characterized in that** the hydraulic medium feed line (30) is in each case fluidly connected or connectable to the first hydraulic working chamber (23) of the length-adjusting apparatus (20) and/or the second hydraulic working chamber (24) of the length-adjusting apparatus (20) preferably by a respective check valve (70A, 70B), wherein hydraulic medium can be drawn into the respective hydraulic working chamber (23, 24) through the check valve (70A, 70B) via the hydraulic medium feed line (30) particularly by the negative acting pressure in the respective working chamber (23, 24).

16. The connecting rod (100) according to one of claims 1 to 15, **characterized in that** the first valve (V1) and/or the second valve (V2) of the control device (140) is/are at least partly, preferably completely, accommodated in the connecting rod by means of a valve housing (50), wherein the valve housing (50) is in particular screwed into the connecting rod.

17. The connecting rod (100) according to one of claims 1 to 15, **characterized in that** the first valve (V1) and/or the second valve (V2) of the control device (240, 340, 440, 540) is/are accommodated in the connecting rod without a valve housing.

18. A reciprocating piston engine, in particular a reciprocating piston internal combustion engine, comprising at least one connecting rod (100), **characterized in that** the connecting rod (100) is designed in accordance with at least one of claims 1 to 17.

19. A vehicle having a reciprocating piston engine, in particular a reciprocating piston internal combustion engine, **characterized in that** the reciprocating piston internal combustion engine is designed in accordance with claim 18.

## Revendications

1. Bielle (100) ajustable en longueur pour un moteur à pistons alternatifs, en particulier pour un moteur à combustion interne à pistons alternatifs, présentant :
- un dispositif d'ajustement de longueur (20) hydraulique servant à ajuster une longueur de bielle (L) active de la bielle (100),
- un système de commande (140, 240, 340, 440, 540) pouvant être commuté au moins entre deux états de commutation, servant à commander l'ajustement de longueur de la bielle (100),
- dans laquelle le dispositif d'ajustement de longueur (20) présente au moins un vérin hydraulique (21) avec un piston (22) et un premier espace de travail (23) hydraulique et un deuxième espace de travail (24) hydraulique,
- dans laquelle le système de commande (140, 240, 340, 440, 540) présente au moins une première soupape (V1) et une deuxième soupape (V2),
- dans laquelle la première soupape (V1) du système de commande (140, 240, 340, 440, 540) est reliée en communication fluidique au premier espace de travail (23) hydraulique du dispositif d'ajustement de longueur (20) et la deuxième soupape (V2) est reliée au deuxième espace de travail (24) hydraulique,
- dans laquelle la première soupape (V1) peut être actionnée à l'aide d'un premier piston de réglage (45A) pouvant être coulissé de manière axiale le long d'un premier axe de réglage (S1) et pouvant être actionné de manière hydraulique et la deuxième soupape (V2) peut être actionnée à l'aide d'un deuxième piston de réglage (47B) pouvant être coulissé de manière axiale le long d'un deuxième axe de réglage (S2) et pouvant être actionné de manière hydraulique, et
- dans laquelle le premier axe de réglage (S1) de la première soupape (V1) du système de commande (140, 240, 340, 440, 540) est différent du deuxième axe de réglage (S2) de la deuxième soupape (V2) du système de commande (140, 240, 340, 440, 540),
**caractérisée en ce que** le premier axe de réglage (S1) de la première soupape (V1) du système de commande (140, 240, 340, 440, 540) et le deuxième axe de réglage (S2) de la deuxième soupape (V2) du système de commande (140, 240, 340, 440, 540) s'étendent de manière parallèle par rapport à un axe de vilebrequin (KW), respectivement par rapport à un état de montage, conforme au fonctionnement, de la bielle (100) dans un moteur à pistons alternatifs, en particulier dans un moteur à combustion interne à pistons alternatifs.

2. Bielle (100) selon la revendication 1, **caractérisée en ce que** la bielle (100) présente une première section de corps de bielle (2) et une seconde section de corps de bielle (3), dans laquelle de préférence les deux sections de corps de bielle (2, 3) peuvent être coulissées l'une par rapport à l'autre pour ajuster une longueur de bielle (L) active, en particulier le long d'un axe longitudinal (A) de la bielle.

3. Bielle (100) selon la revendication 2, **caractérisée en ce que** les deux sections de corps de bielle (2, 3) peuvent être coulissées l'une dans l'autre de manière télescopique pour ajuster la longueur de bielle (L) active, de préférence le long de l'axe longitudinal (A) de la bielle, dans laquelle de préférence une des deux sections de corps de bielle (3) forme le vérin hydraulique (21) du dispositif d'ajustement de longueur (20) et le piston (22) du dispositif d'ajustement de longueur (20) est fixé au niveau de l'autre section de corps de bielle (2).

4. Bielle (100) selon l'une quelconque des revendications 1 à 3, **caractérisée en ce que** dans un premier état de commutation du système de commande (140, 240, 340, 440, 540), un conduit de retour de milieu hydraulique provenant du premier espace de travail (23) hydraulique du dispositif d'ajustement de longueur (20) est fermé et le deuxième espace de travail (24) hydraulique du dispositif d'ajustement de longueur (20) est drainé, dans laquelle dans un deuxième état de commutation du système de commande (140, 240, 340, 440, 540), de préférence le premier espace de travail (23) hydraulique du dispositif d'ajustement de longueur (20) est drainé et le conduit de retour de milieu hydraulique provenant du deuxième espace de travail (24) hydraulique du dispositif d'ajustement de longueur (20) est fermé.

5. Bielle selon l'une quelconque des revendications 1 à 4, **caractérisée en ce que** le premier piston de réglage (45A) de la première soupape (V1) et/ou le deuxième piston de réglage (45B) de la deuxième soupape (V2) sont réalisés en tant que piston de réglage (45A, 4B) à action simple, dans laquelle le piston de réglage (45A, 45B) peut être coulissé de manière axiale de préférence dans au moins une direction à l'encontre d'une force de rappel de piston de réglage, et dans laquelle la soupape (V1, V2) associée présente de préférence un système de rappel de piston de réglage (47A, 47B), en particulier un ressort de rappel de piston de réglage (47A, 47B), pour générer la force de rappel de piston de réglage.

6. Bielle (100) selon au moins l'une quelconque des revendications 1 à 4, **caractérisée en ce que** le premier piston de réglage (45A, 45B) de la première soupape (V1) et/ou le deuxième piston de réglage (45B) de la deuxième soupape (V2) sont réalisés en tant que piston de réglage (45A, 45B) à double action, dans laquelle la bielle (100) présente, pour actionner le système de commande (140, 240, 340, 440, 540), de préférence en supplément une soupape de commutation (80), au moyen de laquelle une pression différentielle de milieu hydraulique peut être appliquée au niveau du piston de réglage (45A, 45B), dans laquelle la soupape de commutation (80) est réalisée en particulier de telle manière que dans un premier état de commutation de la soupape de commutation (80), une première pression différentielle de milieu hydraulique est appliquée au niveau du piston de réglage (45A, 45B), laquelle entraîne un coulissement axial du piston de réglage (45A, 45B) dans une première position de réglage et, dans un deuxième état de commutation de la soupape de commutation (80), une deuxième pression différentielle de milieu hydraulique, laquelle entraîne un coulissement axial du piston de réglage (45A, 45B) dans une deuxième position de réglage.

7. Bielle (100) selon l'une quelconque des revendications 1 à 6, **caractérisée en ce que** la première soupape (V1) du système de commande (140, 240, 340, 440, 540) et/ou la deuxième soupape (V2) du système de commande (140, 240, 340, 440, 540) sont une soupape de levage et présentent un corps de soupape (41A, 41B) pouvant être coulissé de manière axiale le long d'un axe de levage (H1, H2), dans laquelle le corps de soupape (41A, 41B) peut être pressé contre un siège de soupape (43A, 43B) pour fermer le conduit de retour de milieu hydraulique provenant de l'espace de travail (23, 24) hydraulique associé relié ou pouvant être relié en communication fluidique à la soupape (V1, V2) et peut être relevé du siège de soupape (43A, 43B) pour drainer l'espace de travail (23, 24) associé, dans laquelle le relèvement du corps de soupape (41A, 41B) du siège de soupape (43A, 43B) peut être entraîné de préférence à l'aide du piston de réglage (45A, 45B) respectif de la soupape (V1, V2).

8. Bielle (100) selon la revendication 7, **caractérisée en ce que** l'axe de levage (H1, H2) d'au moins une soupape de levage (V1, V2) s'étend de manière parallèle par rapport à l'axe de vilebrequin (KW), dans laquelle de préférence les axes de levage (H1, H2) de toutes les soupapes de levage (V1, V2) du système de commande (140, 240, 340, 440, 540) s'étendent de manière parallèle par rapport à l'axe de vilebrequin (KW).

9. Bielle (100) selon la revendication 7 ou 8, **caractérisée en ce que** la première soupape (V1) du système de commande et la deuxième soupape (V2) du système de commande (140, 240, 340, 440, 540) sont respectivement une soupape de levage (V1, V2), dans laquelle dans le premier état de commutation du système de commande (140, 240, 340, 440, 540), le corps de soupape (41A) de la première soupape (V1) repose au niveau du siège de soupape (43A) et ferme un conduit de retour de milieu hydraulique provenant du premier espace de travail (23) hydraulique du dispositif d'ajustement de longueur (20) et le corps de soupape (41 B) de la deuxième soupape (V2) est relevé du siège de soupape (43B) et le deuxième espace de travail (24) hydraulique du dispositif d'ajustement de longueur (20) est drainé et dans laquelle dans le deuxième état de commutation du système de commande (140, 240, 340, 440, 540), le corps de soupape (41A) de la première soupape (V1) est relevé du siège de soupape (43A) et le premier espace de travail (23) hydraulique est drainé et le corps de soupape (41B) de la deuxième soupape (V2) repose au niveau du siège de soupape (43B) et ferme un conduit de retour de milieu hydraulique provenant du deuxième espace de travail (24) hydraulique du dispositif d'ajustement de longueur (20).

10. Bielle (100) selon l'une quelconque des revendications 7 à 9, **caractérisée en ce que** le corps de soupape (41A, 41B) d'au moins une soupape de levage (V1, V2) est réalisé au moins en partie en forme de bille, en forme de cône ou en forme de cône tronqué au moins dans une zone de contact, par laquelle le corps de soupape (41A, 41B) peut être pressé contre le siège de soupape (43A, 43B), dans laquelle le corps de soupape (41A, 41B) est en particulier une bille, un corps conique ou un cône tronqué.

11. Bielle (100) selon l'une quelconque des revendications 7 à 10, **caractérisée en ce que** le corps de soupape (41A, 41B) d'au moins une soupape de levage (V1, V2) est un composant séparé du piston de réglage (45A, 45B) de la soupape (V1, V2) associée, dans laquelle le relevage du corps de soupape (41A, 41B) du siège de soupape (43A, 43B) peut être entraîné de préférence par un repoussement du corps de soupape (41A, 41B) du siège de soupape (43A, 43B) à l'aide du piston de réglage (45A, 45B) de la soupape.

12. Bielle (100) selon la revendication 11, **caractérisée en ce que** le corps de soupape (41A, 41B) d'au moins une soupape de levage (V1, V2) peut être relevé du siège de soupape (43A, 43B) à l'encontre d'une force de rappel de corps de soupape, dans laquelle la soupape (V1, V2) présente, pour générer la force de rappel de corps de soupape, de préférence un système de rappel de corps de soupape (42A, 42B), au moyen duquel en particulier également le pressage du corps de soupape (41A, 41B) contre le siège de soupape (43A, 43B) peut être entraîné.

13. Bielle (100) selon la revendication 11 ou 12, **caractérisée en ce que** la bielle (100) présente un conduit d'arrivée de milieu hydraulique (30), dans laquelle le premier espace de travail (23) hydraulique du dispositif d'ajustement de longueur (20) est relié ou peut être relié en communication fluidique au conduit d'arrivée de milieu hydraulique (30) de préférence au moins par l'intermédiaire de la première soupape (V1), réalisée en tant que soupape de levage, du système de commande (140, 240, 340, 440, 540) et/ou le deuxième espace de travail (24) hydraulique du dispositif d'ajustement de longueur (24) est relié ou peut être relié en communication fluidique au conduit d'arrivée de milieu hydraulique (30) au moins par l'intermédiaire de la deuxième soupape (V2), réalisée en tant que soupape de levage, du système de commande (140, 240, 340, 440, 540), dans laquelle un relevage du corps de soupape (41A, 41B) de la soupape de levage (V1, V2) associée du siège de soupape (43A, 43B) peut être entraîné en particulier par une dépression appliquée dans l'espace de travail (23, 24) associé et du milieu hydraulique peut être aspiré par la soupape de levage (V1, V2), reliée ou pouvant être reliée en communication fluidique audit espace de travail (23, 24), du système de commande (140, 240, 340, 440, 540) par l'intermédiaire du conduit d'arrivée de milieu hydraulique (30).

14. Bielle (100) selon l'une quelconque des revendications 7 à 10, **caractérisée en ce que** le corps de soupape (41A, 41B) d'au moins une soupape de levage (V1, V2) du système de commande (540) est relié de manière solidaire au piston de réglage (45A, 45B), dans laquelle le relevage du corps de soupape (41A, 41B) du siège de soupape (43A, 43B) peut être entraîné de préférence par un retrait du corps de soupape (41A, 41B) du siège de soupape au moyen du piston de réglage (45A, 45B) de la soupape (V1, V2) et le pressage du corps de soupape (41A, 41B) contre le siège de soupape peut être entraîné en particulier également à l'aide du piston de réglage (45A, 45B).

15. Bielle (100) selon l'une quelconque des revendications 1 à 14, dans laquelle la bielle présente un conduit d'arrivée de milieu hydraulique (30), **caractérisée en ce que** le conduit d'arrivée de milieu hydraulique (30) est relié ou peut être relié en communication fluidique au premier espace de travail (23) hydraulique du dispositif d'ajustement de longueur (20) et/ou au deuxième espace de travail (24) hydraulique du dispositif d'ajustement de longueur (20) de préférence par l'intermédiaire de respectivement une soupape anti-retour (70A, 70B), dans laquelle du milieu hydraulique peut être aspiré dans l'espace de travail (23, 24) hydraulique respectif par l'intermédiaire du conduit d'arrivée de milieu hydraulique (30) en particulier par une dépression appliquée dans l'espace de travail (23, 24) hydraulique associé.

16. Bielle selon l'une quelconque des revendications 1 à 15, **caractérisée en ce que** la première soupape (V1) et/ou la deuxième soupape (V2) du système de commande (140) sont logées au moins en partie, de préférence en totalité, à l'aide d'un carter de soupape (50) dans la bielle, dans laquelle le carter de soupape (50) est vissé en particulier dans la bielle.

17. Bielle (100) selon l'une quelconque des revendications 1 à 15, **caractérisée en ce que** la première soupape (V1) et/ou la deuxième soupape (V2) du système de commande (240, 340, 440, 540) sont logées dans la bielle sans un carter de soupape.

18. Moteur à pistons alternatifs, en particulier moteur à combustion interne à pistons alternatifs, avec au moins une bielle (100), **caractérisé en ce que** la bielle (100) est réalisée selon au moins l'une quelconque des revendications 1 à 17.

19. Véhicule avec un moteur à pistons alternatifs, en particulier avec un moteur à combustion interne à pistons alternatifs, **caractérisé en ce que** le moteur à combustion interne à pistons alternatifs est réalisé selon la revendication 18.
